# EUROPEAN PATENT APPLICATION

(11) **EP 4 707 128 A1**
(43) Date of publication of application: **11.03.2026**
(21) Application number: 25200192.0
(22) Date of filing: 04.09.2025
(51) Int. Cl.: B62D 5/04, B62D 3/02, F16H 1/32

(54) **STEERING DEVICE**

(30) Priority: 06.09.2024 JP 2024153923; 19.12.2024 JP 2024224239
(71) Applicant: Nabtesco Corporation, Tokyo 102-0093 (JP)
(72) Inventor: Tanaka, Satoshi, 50969 Köln (DE); Thorn, Tobias, 65555 Limburg an der Lahn (DE)
(74) Representative: Hoffmann, Jürgen

(57) **Abstract**

A steering device (10) according to one aspect of the invention includes: a first gear mechanism (11) configured to receive rotation of steering wheel operation, convert a direction of the rotation, and output converted rotation as primary rotation; and a second gear mechanism (20) configured to receive the primary rotation output from the first gear mechanism (11), decelerate the primary rotation, and output decelerated rotation. When a second axial direction (F2) is defined as an axial direction of an output shaft (25) included in the second gear mechanism (20), the first gear mechanism (11) is located such that at least a portion of the first gear mechanism (11) falls within a width (H2) of the second gear mechanism (20) along the second axial direction (F2).

## Description

### TECHNICAL FIELD

The present invention relates to a steering device.

### BACKGROUND

Conventionally, electric power steering systems are known. An electric power steering system reduces a steering effort of a driver by applying, to a steering mechanism of the vehicle, a driving force of an electric motor, in addition to the steering force exerted by the driver. A steering device used in an electric power steering system transmits the steering force to an output section connected to the wheel-side steering mechanism via a speed reducer, while simultaneously applying the driving force of an electric motor (see, for example, European Patent No. EP 3 347 258 B1).

In the steering device known from European Patent No. EP 3 347 258 B1, an output shaft protrudes from one axial end of the speed reducer. An operating mechanism connected to the steering wheel is disposed radially outside the portion that retains the proximal end of the output shaft. However, in this configuration, the speed reducer and the operating mechanism, which are disposed such that their axial directions intersect, are misaligned with each other in the axial direction of the speed reducer. As a result, the entire device tends to be bulky.

One object of the present invention is to achieve further downsizing of a steering device used in a steering system of a vehicle.

A steering device according to one aspect of the invention comprises: a first gear mechanism configured to receive rotation of steering wheel operation, convert a direction of the rotation, and output converted rotation as primary rotation; and a second gear mechanism configured to receive the primary rotation output from the first gear mechanism, decelerate the primary rotation, and output decelerated rotation. When a second axial direction is defined as an axial direction of an output shaft included in the second gear mechanism, the first gear mechanism is located such that at least a portion of the first gear mechanism falls within a width of the second gear mechanism along the second axial direction. According to this configuration, the first gear mechanism (operating mechanism) for converting the rotational direction of the steering wheel operation, and the second gear mechanism (speed reducer) for decelerating the output of the first gear mechanism can be arranged so as to overlap each other along the second axial direction of the second gear mechanism. Thus, the thickness of the entire device in the second axial direction can be reduced for downsizing. In particular, the first transmission mechanism may be arranged such that the first transmission mechanism lies completely within the width of the second transmission mechanism along the second axial direction.

The steering device may further comprise: a drive device configured to output a driving force for assisting the steering wheel operation. The drive device may be located such that at least a portion of the drive device falls within the width of the second gear mechanism along the second axial direction. According to this configuration, the drive device (assist motor) that outputs the steering assist force can be arranged to overlap the second gear mechanism in the second axial direction of the second gear mechanism. Thus, the thickness of the entire device including the drive device in the second axial direction can be reduced for further downsizing.

In the steering device, the second gear mechanism may further include a primary input gear that is located inside an outline of the second gear mechanism as viewed from the second axial direction, The first gear mechanism may include a first output gear having a larger diameter than the primary input gear. The first output gear may be meshed with the primary input gear. According to this configuration, the second gear mechanism is downsized by positioning the primary input gear inside the outline of the second gear mechanism as viewed from the second axial direction. The first output gear of the first gear mechanism has a larger diameter than the primary input gear and meshes with the primary input gear. As a result, power can be transmitted between the first gear mechanism and the second gear mechanism while maintaining the spacing between them, and the rotational output of the first gear mechanism can be transmitted to the second gear mechanism with an increased speed.

The steering device may further comprise a transmission mechanism that couples the drive device to the second gear mechanism. The transmission mechanism may decelerate the driving force output from the drive device and transmit the decelerated driving force to the second gear mechanism. According to this configuration, the driving force of the drive device is decelerated and transmitted to the second gear mechanism, thereby reducing the torque generated by the drive device and downsizing the drive device.

In the steering device, the second gear mechanism may further include transmission gears and a second input gear having a smaller diameter than the transmission gears, and the transmission gears may include a primary input gear, The second input gear may mesh with the transmission gears. The transmission mechanism transmits to the second input gear the driving force output from the drive device. According to this configuration, the output of the drive device can be further decelerated by transmitting the driving force of the drive device to the second input gear of the second gear mechanism, thereby reducing the output torque of the drive device for downsizing.

In the steering device, the drive device may further include a drive shaft that is positioned parallel to the output shaft of the second gear mechanism, The drive device may have a smaller outline than the second gear mechanism, as viewed from the second axial direction. According to this configuration, the drive device and the second gear mechanism can be arranged in parallel such that their axial directions are parallel. This allows the entire device to be downsized in the second axial direction, compared to the case where the drive device and the second gear mechanism overlap each other in the axial direction. Furthermore, the drive device is smaller than the second gear mechanism as viewed from the second axial direction, and thus the entire device can be downsized as viewed from the axial direction.

In the steering device, the drive device may further include a drive shaft that is positioned parallel to the output shaft of the second gear mechanism, The second gear mechanism may include an input shaft to which the primary rotation is input. The transmission mechanism may include: a first pulley attached to the drive shaft of the drive device; a second pulley attached to the input shaft, the second pulley having a larger diameter than the first pulley; and a transmission belt stretched round the first pulley and the second pulley. According to this configuration, the drive device can be coupled to the second gear mechanism via the belt-type transmission mechanism. Therefore, compared to the use of a gear-type transmission mechanism, the effect of backlash can be reduced to improve operational accuracy. Furthermore, the spacing between the drive device and the second gear mechanism can be secured with a small number of parts.

The steering device may further comprise a second pulley support shaft that supports the second pulley. The second pulley support shaft may also serve as a transmission output shaft that transmits the driving force to the second gear mechanism. According to this configuration, use of the second pulley support shaft also as the transmission output shaft reduces the number of components, thereby achieving weight reduction and improved operational accuracy.

In the steering device, the second gear mechanism may further include a second input gear. The second input gear may be formed integrally with the transmission output shaft. According to this configuration, the second input gear of the second gear mechanism is integrated with the transmission output shaft, which also serves as the second pulley support shaft, and thus the number of components can be reduced, thereby achieving weight reduction and improved operational accuracy.

In the steering device, the transmission output shaft may further include a shaft portion that extends along the second axial direction into the second gear mechanism. The shaft portion may be supported via a bearing inside the second gear mechanism. According to this configuration, the shaft portion provided at the distal end of the transmission output shaft is supported inside the second gear mechanism, and thus the transmission output shaft can be supported at both ends thereof by the bearing on the transmission mechanism side and the bearing on the second gear mechanism side. This configuration simplifies and downsizes the bearing structure on the transmission mechanism side, as compared to the case where the transmission output shaft is supported only by a bearing on the transmission mechanism side.

[The steering device may further comprise: a flange which forms a side of a gear case of the second gear mechanism, the side facing the second axial direction; and a case which houses conversion mechanism parts of the first gear mechanism. The first gear mechanism may include a first input shaft to which the rotation of the steering wheel operation is input. When a first axial direction is defined as an axial direction of the first input shaft, the first gear mechanism may be located such that the first axial direction intersects the second axial direction of the second gear mechanism. The first gear mechanism and the second gear mechanism may be arranged along an intersecting direction that intersects the first axial direction and the second axial direction. The flange and the case may be formed symmetrically with respect to an imaginary plane along the second axial direction and the intersecting direction. The first gear mechanism may be capable of being attached in a posture in which an orientation of the conversion mechanism parts with respect to the case is inverted along the first axial direction. According to this configuration, the flange and the case can be formed symmetrically with respect to the imaginary plane along the second axial direction and the intersecting direction (a plane orthogonal to the first axial direction). The conversion mechanism parts of the first gear mechanism can be attached to the case in an inverted orientation along the first axial direction. Thus, the steering device can be used for both right-hand drive and left-hand drive configurations.

A steering device according to an independent aspect of the invention, which may be realized separately or in combination with the above mentioned aspects, comprises: a first gear mechanism configured to receive rotation of steering wheel operation, convert a direction of the rotation, and output converted rotation as primary rotation; and a second gear mechanism configured to receive the primary rotation output from the first gear mechanism, decelerate the primary rotation, and output decelerated rotation. The second gear mechanism includes a gear case, a gear section housed in the gear case, and at least one crankshaft. The gear case includes a first case and a second case, the second case being rotatably supported on an outer circumference of the first case and having internal teeth that mesh with the gear section. The at least one crankshaft is supported on the first case. The gear section includes oscillating gears that are supported on eccentric portions of the at least one crankshaft and capable of eccentric motion by rotation of the eccentric portions. The oscillating gears have external teeth that mesh with the internal teeth. According to this configuration, the second gear mechanism serves as an eccentric oscillation speed reducer that can greatly decelerate the input rotation by eccentrically moving the oscillating gears having external teeth inside the second case having internal teeth. Thus, backlash occurring on the motor side and column side at the input side of the speed reducer is significantly decelerated and output by the speed reducer. The eccentric oscillation speed reducers also have the characteristic of low backlash in the gear mechanism itself. Therefore, the backlash (hysteresis loss) on the output side of the speed reducer is extremely small, and thus the steering system can have high responsiveness and controllability. The features described in connection with this embodiment may be realized independently or in combination with the features of the steering device according to any of the preceding or following embodiments.

In the steering device, the oscillating gears may further be trochoid gears in which a plurality of the external teeth can simultaneously contact the internal teeth. According to this configuration, since the oscillating gears are trochoid gears in which a plurality of the external teeth are constantly in contact with the internal teeth, backlash in the speed reducer can be reduced, and the steering system can have high responsiveness and controllability.

In the steering device, the second case may further retain a plurality of columns that form arc profiles of the internal teeth. Each of the plurality of columns may be rotatable around a respective axial center. According to this configuration, the arc profiles of the internal teeth of the second case are formed by a plurality of rotatable columns, so that the sliding contact of the external teeth against the internal teeth is converted into a rolling contact by rotation of the plurality of columns. Therefore, the gear mechanism can have low friction loss and high efficiency.

In the present application, a first axial direction F1 is defined as the axial direction of the first input shaft of the first gear mechanism. Correspondingly, a second axial direction F2 is defined as the axial direction of an output shaft of the second gear mechanism. The terms "first" and "second" are merely used for distinction between these two axial directions and are not intended to imply any order or ranking.

The present invention makes it possible to achieve further downsizing of a steering device used in a steering system of a vehicle.

### BRIEF DESCRIPTION OF THE DRAWINGS

Fig. 1A schematically shows the configuration of a steering assisting device for a right-hand drive vehicle employing a steering unit relating to an embodiment of the present invention.
Fig. 1B schematically shows the configuration of a steering assisting device for a left-hand drive vehicle employing a steering unit relating to an embodiment of the present invention.
Fig. 2 is a perspective view showing the steering unit relating to an embodiment of the present invention.
Fig. 3 is a perspective view showing the steering unit relating to the embodiment viewed from a different direction than in Fig. 2.
Fig. 4 shows the steering unit as viewed from the axial direction of an operation input shaft.
Fig. 5 shows the steering unit as viewed from the axial direction of an output shaft.
Fig. 6 is a sectional view along a line VI-VI in Fig. 4, showing a section of a first gear mechanism.
Fig. 7 shows mechanism parts of a first gear mechanism and a second gear mechanism of the steering unit as viewed from the axial direction of the output shaft.
Fig. 8 is a sectional view along a line VIII-VIII in Fig. 5, showing the sections of the first gear mechanism, the second gear mechanism, and a drive device.
Fig. 9 is a perspective view showing a case flange molding and a washer plate.
Fig. 10A is a perspective view showing conversion mechanism parts of the first gear mechanism, the conversion mechanism parts being separated from the case.
Fig. 10B is a perspective view showing the case flange member being inverted in a first axial direction relative to Fig. 10A.
Fig. 11 shows the steering unit as viewed from a second axial direction, representing a modification of the location of the drive device.
Fig. 12A is a perspective view showing a first modification of the location of a controller.
Fig. 12B is a perspective view showing a second modification of the controller.
Fig. 13 is a sectional view of the second gear mechanism cut along a plane orthogonal to the axial direction.
Fig. 14A illustrates a first torque transmission path of the steering unit.
Fig. 14B illustrates a second torque transmission path of the steering unit.
Fig. 15 is a graph showing a hysteresis curve of the speed reducer.

### DESCRIPTION OF THE PREFERRED EMBODIMENTS

Embodiments of the invention will be now described with reference to the accompanying drawings. The present invention, however, is not limited to these embodiments.

### Steering Assisting Device 1

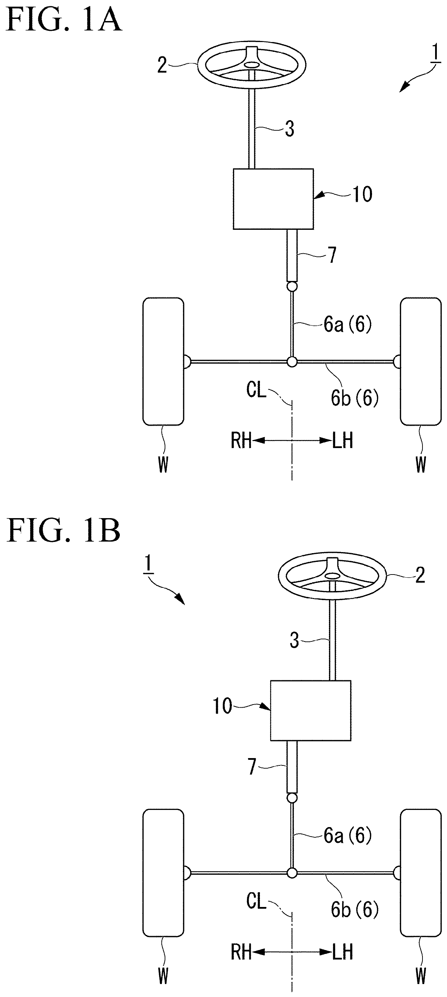

Fig. 1A schematically shows the configuration of a steering assisting device 1 for a right-hand drive vehicle employing a steering unit (steering device) 10 relating to an embodiment of the present invention. Fig. 1B schematically shows the configuration of a steering assisting device 1 for a left-hand drive vehicle employing a steering unit (steering device) 10 relating to an embodiment of the present invention. The reference sign CL indicates the lateral center of the vehicle. The arrow LH indicates the left side of the vehicle. The arrow RH indicates the right side of the vehicle.

As shown in Figs. 1A and 1B, the steering assisting device 1 includes a steering wheel 2, a steering shaft (column shaft) 3, a steering unit 10, and a steering mechanism 6. The steering wheel 2 is provided in front of the driver's seat in the vehicle and is rotatable by the driver. The steering shaft 3 is coupled with the steering wheel 2 so as to be rotatable integrally with the steering wheel 2, and extends downward from the steering wheel 2. The steering shaft 3 receives a steering force (steering torque) input through the steering wheel 2. The steering unit 10 is coupled to the distal end (lower end) of the steering shaft 3. The steering mechanism 6 is actuated by at least one of the steering torque or the assisting torque described below via the steering unit 10.

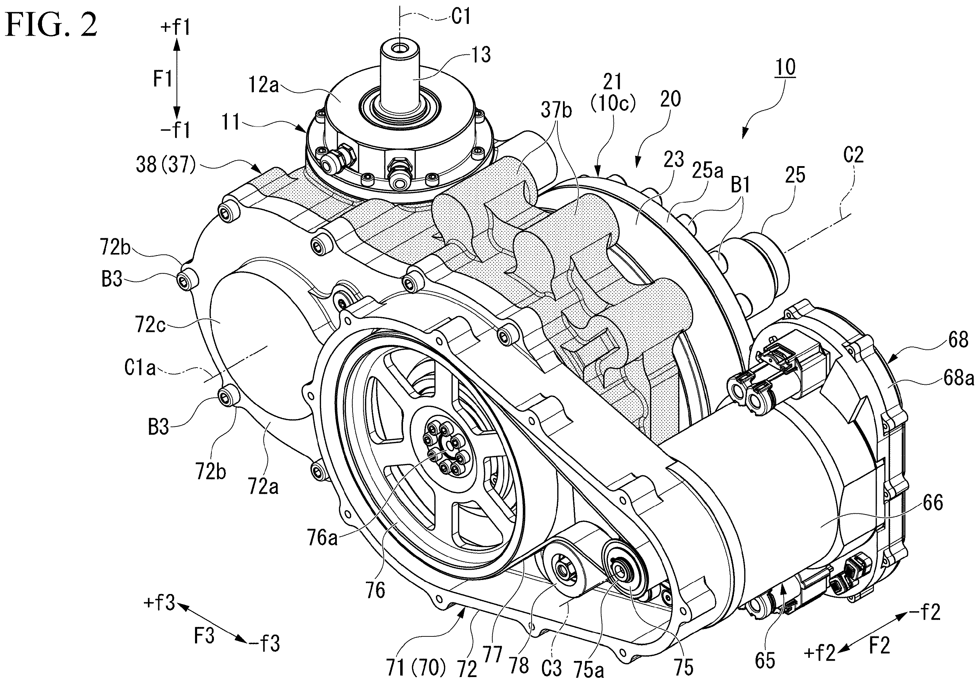

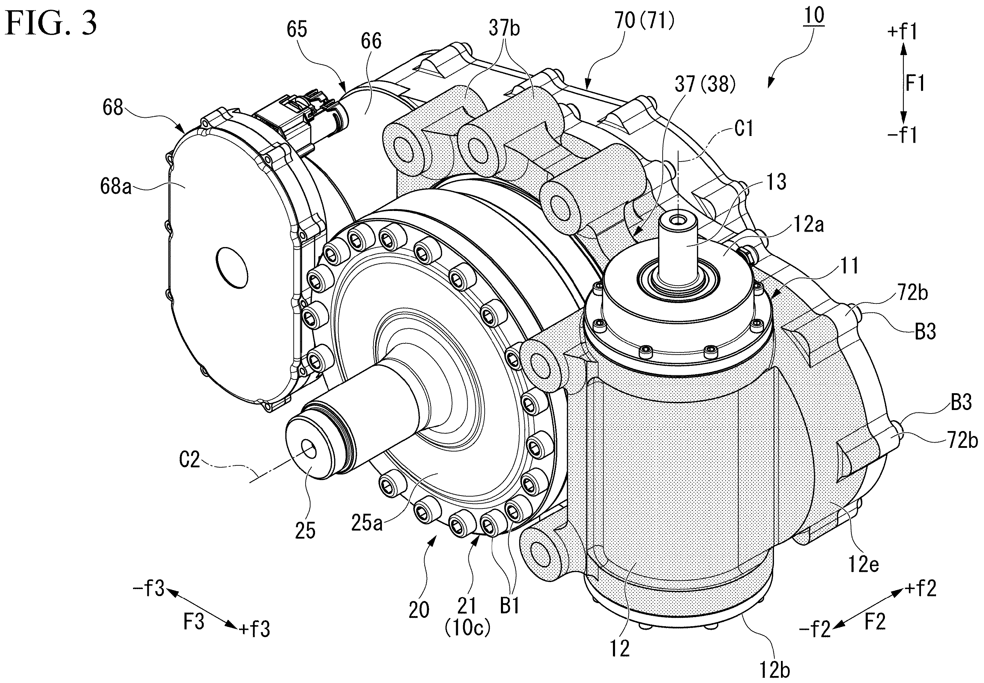

The steering unit 10 has an output shaft 25 (see Figs. 2 and 3). The output shaft 25 has an output arm 7 provided thereon. The distal end of the output arm 7 is coupled with the steering mechanism 6 of the vehicle. The steering mechanism 6 includes an operating arm 6a and a tie rod 6b. The operating arm 6a receives output from the output arm 7, and the tie rod 6b steers the left and right front wheels W of the vehicle in response to the operation of the operating arm 6a. The output arm 7 oscillates when the output shaft 25 of the steering unit 10 outputs at least one of the steering torque or the assisting torque. As a result, the output arm 7 actuates the steering mechanism 6 to steer the left and right front wheels W of the vehicle.

### Steering Unit 10

Fig. 2 is a perspective view showing the steering unit 10 relating to an embodiment. Fig. 3 is a perspective view showing the steering unit 10 relating to the embodiment viewed from a different direction than in Fig. 2. As shown in Figs. 2 and 3, the steering unit 10 includes a first gear mechanism 11, a second gear mechanism 20, and a drive device 65. The first gear mechanism 11 is an operating mechanism to which the steering shaft 3 is connected. The first gear mechanism 11 converts rotational motion around the central axis C1 (first axis) of the steering shaft 3 into rotational motion around the orthogonal axis C1a, which is orthogonal to the first axis C1. The orthogonal axis C1a is parallel to the central axis (second axis) C2 of the output shaft 25, which is described below.

Hereinafter, the direction parallel to the first axis C1 is defined as the first axial direction, and the direction parallel to the orthogonal axis C1a and the second axis C2 is defined as the second axial direction. In the drawings, the arrow F1 indicates the first axial direction. The arrow F2 indicates the second axial direction. The arrow F3 indicates the third direction (intersecting direction) that is orthogonal to the first and second axial directions. Furthermore, one side along the first axial direction F1 is indicated by (+f1), and the other side is indicated by (-f1). One side along the second axial direction F2 is indicated by (+f2), and the other side is indicated by (-f2). One side along the third direction F3 is indicated by (+f3), and the other side is indicated by (-f3).

The second gear mechanism 20 is a speed reducer. The second gear mechanism 20 receives a primary rotation around the orthogonal axis C1a, which is output from the first gear mechanism 11. The second gear mechanism 20 transmits the primary rotation while decelerating it, and outputs the decelerated rotation as a secondary rotation from the output shaft 25, which is parallel to the second axial direction F2. The second axial direction F2 may be defined as a unit axial direction. The first gear mechanism 11 is located on one side (+f3) in the third direction F3 relative to the second gear mechanism 20 so as to be adjacent to the second gear mechanism 20. The drive device 65 is located on the other side (-f3) in the third direction F3 relative to the second gear mechanism 20 so as to be adjacent to the second gear mechanism 20.

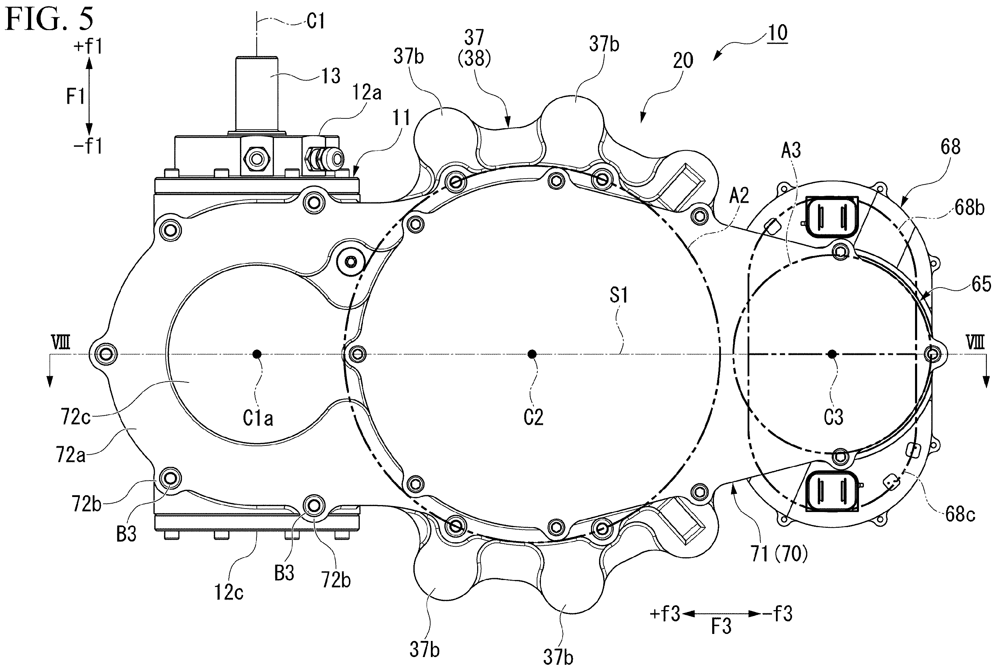

The drive device 65 is an electric motor. The drive device 65 includes a body 66 having a cylindrical shape and a drive shaft 67 (see Fig. 2) protruding outward from one axial end of the body 66. The drive shaft 67 is disposed so that its axial direction (hereinafter defined as the drive axis direction) is parallel to the second axial direction F2. Therefore, the central axis (drive axis) C3 of the drive shaft 67 is parallel to the second axial direction F2. The driving force of the drive device 65 is decelerated by the second gear mechanism 20 and transmitted to the steering mechanism 6. Furthermore, the driving force of the drive device 65 is also decelerated by a transmission mechanism 70 (described below) and input to the second gear mechanism 20. In this embodiment, the reduction ratio of the transmission mechanism 70 is increased to reduce the torque generated by the drive device 65, thereby reducing the diameter of the drive device 65. For example, the outline A3 (see Fig. 5) of the drive device 65 is smaller in diameter than the outline A2 (see Fig. 5) of the second gear mechanism 20 as viewed from the second axial direction F2.

At the other end of the drive device 65 in the axial direction, there is a controller (control device) 68 shaped like an oval, which is long in the first axial direction F1, for example. The controller 68 includes an electronic control device and drive circuits for controlling the operation of the drive device 65. The controller 68 has a flat shape with a reduced thickness in the drive axis direction. The controller 68 has a larger size than the body 66, as viewed from the drive axis direction. The controller 68 includes a case 68a, which forms the exterior of the controller 68, and two drive circuits 68b, 68c (see Fig. 5), which are divided in the first axial direction F1 within the case 68a. The drive circuits 68b, 68c cooperate with each other to control the driving of the drive device 65. Furthermore, even if, for example, one of the drive circuits 68b, 68c fails, the other alone can drive the drive device 65 to generate, for example, approximately half the output of normal operation.

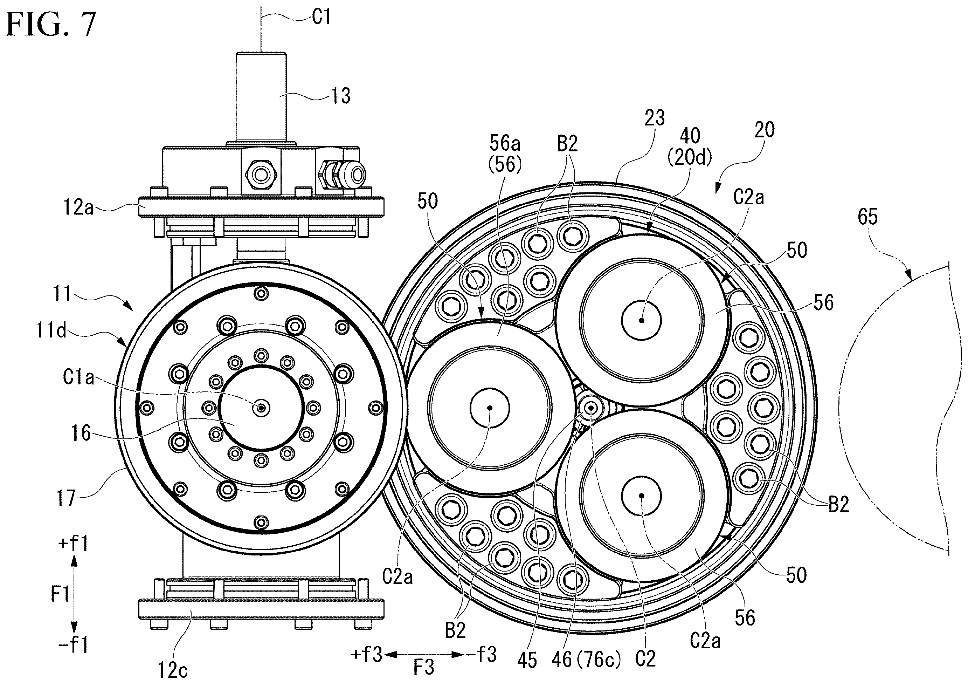

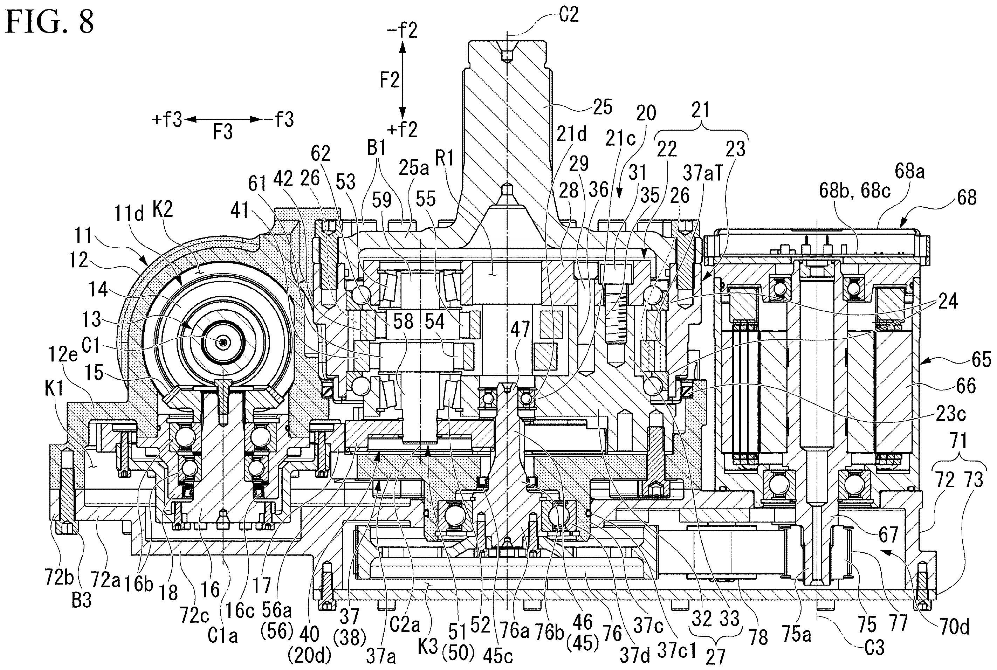

The driving force of the drive device 65 is transmitted to the output shaft 25 and input shaft 45 (see Figs. 7 and 8) in the second gear mechanism 20 via the belt-type transmission mechanism 70. The input shaft 45 is positioned coaxially with the output shaft 25. The input shaft 45 may hereinafter be defined as the second input shaft 45. The second input shaft 45 of the second gear mechanism 20 also receives the steering torque whose rotational direction has been converted via the first gear mechanism 11. The first gear mechanism 11, second gear mechanism 20, and drive device 65 are arranged in the third direction F3 (arrangement direction), which is orthogonal to the first and second axial directions F1 and F2.

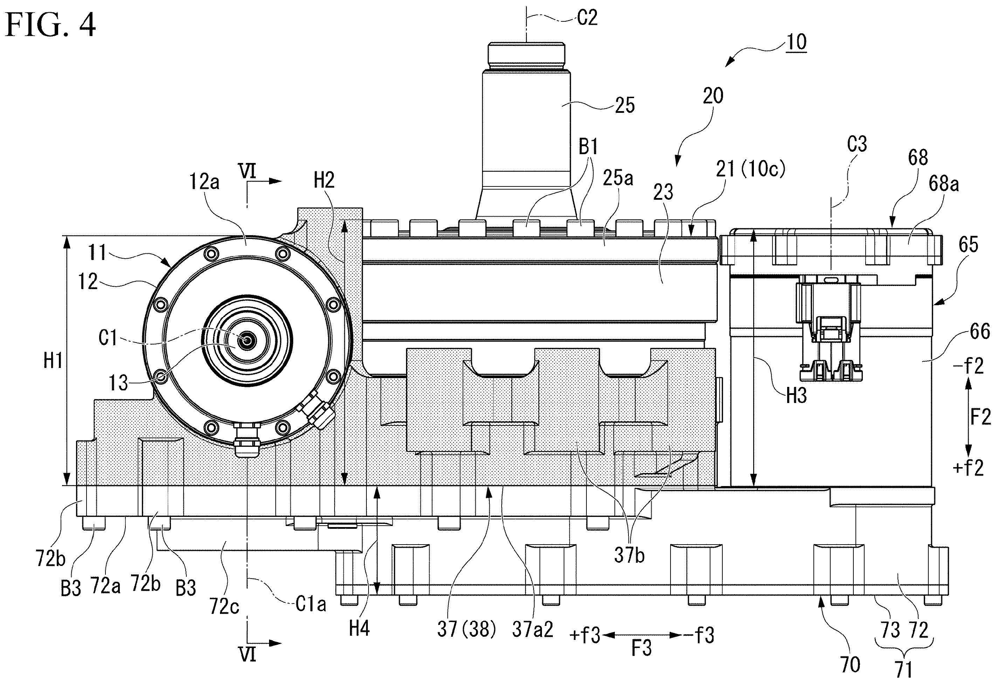

Fig. 4 shows the steering unit 10 as viewed from the axial direction of an operation input shaft 13. As shown in Fig. 4, in the second axial direction F2, the width H2 of the main part of the second gear mechanism 20 contains the width H3 of the main part of the drive device 65 and the width H1 of the main part of the first gear mechanism 11. The width H1 refers to the width excluding the partially protruding portions. The width H2 refers to the width excluding the partially protruding portions such as the output shaft 25. The width H3 refers to the width excluding the partially protruding portions such as the drive shaft 67. Each of the widths H1, H2, and H3 falls within a region extending, for example, from the side surface 37a2 of the flange 37 (described below) located on one side (+f2) in the second axial direction F2 to the distal end of the same located on the other side (-f2) in the second axial direction F2.

Thus, the first gear mechanism 11 (operating mechanism) for converting the rotational direction of the steering wheel operation, the second gear mechanism (speed reducer) 20 for decelerating the output of the first gear mechanism 11, and the drive device 65 (electric motor) for providing the assisting torque to assist the steering wheel operation are arranged so as to overlap each other along the second axial direction F2 of the second gear mechanism 20. This arrangement reduces the thickness of the steering unit 10 in the second axial direction F2, making it easier to place the steering unit 10 in the limited space within the vehicle. This embodiment is based on the configuration in which the entirety of the first gear mechanism 11 and drive device 65 fits within the width H2 of the second gear mechanism 20 along the second axial direction F2. However, this case is not limitative. For example, another configuration may be employed in which at least a portion of each of the first gear mechanism 11 and drive device 65 is placed within the width H2 of the second gear mechanism 20 along the second axial direction F2.

The steering torque transmitted from the steering wheel 2 to the steering shaft 3 is input into the input section of the second gear mechanism 20 via the first gear mechanism 11. The input section of the second gear mechanism 20 receives the steering torque from the first gear mechanism 11 and also receives the assisting torque from the drive device 65. The input section of the second gear mechanism 20 includes the second input shaft 45 and a plurality of transmission gears 56. The second gear mechanism 20 combines the steering torque and assisting torque input from the two systems (first gear mechanism 11 and drive device 65) and transmits the combined torque while decelerating it with a gear section 40 (see Fig. 7). Accordingly, the output section (output shaft 25) of the second gear mechanism 20 outputs the combined torque of the steering torque and the assisting torque, decelerated by a predetermined reduction ratio. In the event of a failure of the drive device 65, the assisting torque is zero or reduced, and the steering torque is decelerated by the second gear mechanism 20 and output.

### First Gear Mechanism 11

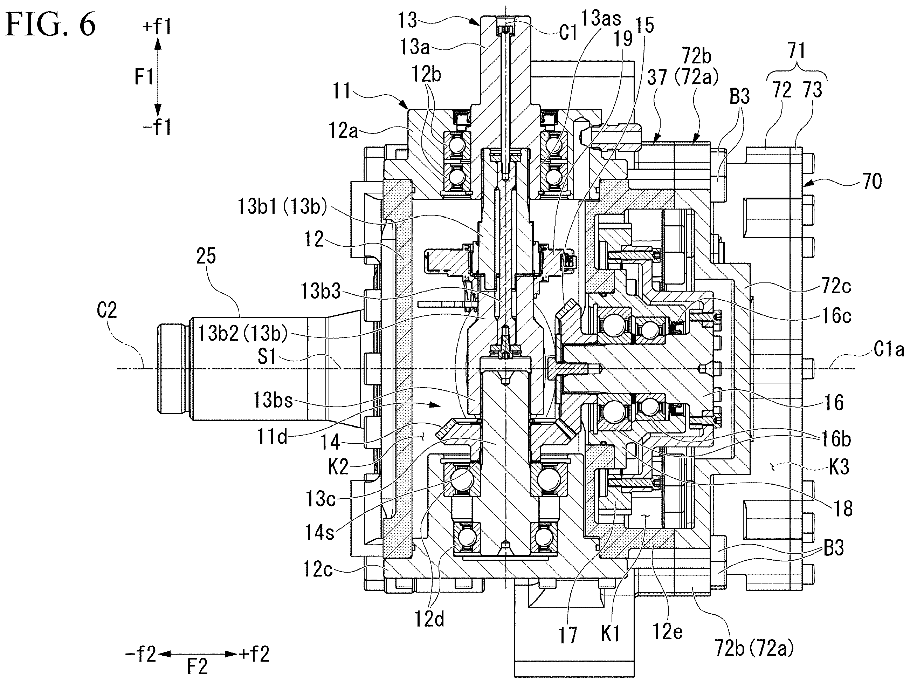

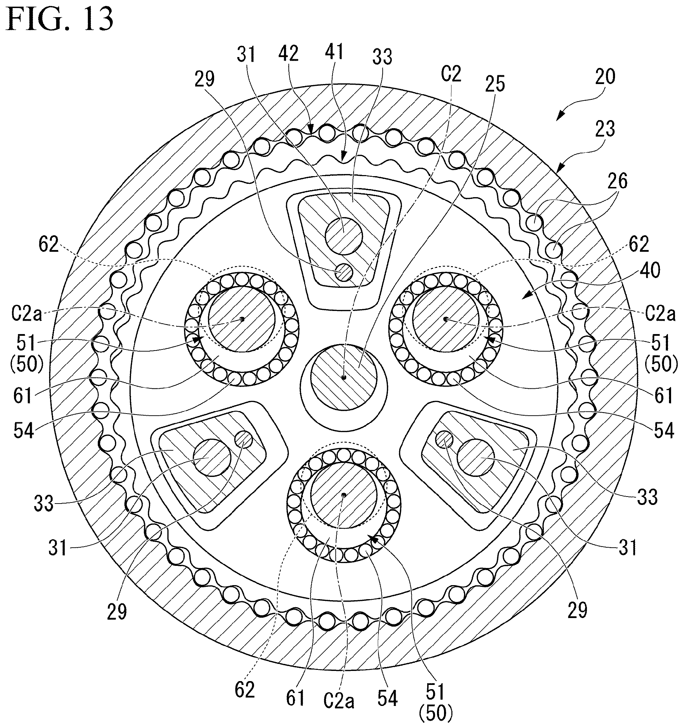

Fig. 5 shows the steering unit 10 as viewed from the axial direction of the output shaft 25. Fig. 6 is a sectional view along a line VI-VI in Fig. 4, showing a section of the first gear mechanism 11. Fig. 7 shows mechanism parts of the first gear mechanism 11 and the second gear mechanism 20 of the steering unit 10 as viewed from the axial direction of the output shaft 25. Fig. 8 is a sectional view along a line VIII-VIII in Fig. 5, showing the sections of the first gear mechanism 11, the second gear mechanism 20, and the drive device 65. Fig. 13 is a sectional view of the second gear mechanism 20 cut along a plane orthogonal to the axial direction.

As shown in Figs. 2 to 8, the first gear mechanism 11 includes a case 12, an operation input shaft 13, a first bevel gear 14, a second bevel gear 15, a first output shaft 16, and a first output gear 17. In this embodiment, the mechanism parts including the operation input shaft 13, first output shaft 16, first bevel gear 14, second bevel gear 15, and first output gear 17 are collectively referred to as conversion mechanism parts 11d.

The case 12 is integrally formed on a unit case 10c. The unit case 10c includes a gear case 21 that houses the reduction mechanism parts 20d, such as gears in the second gear mechanism 20. The unit case 10c serves as the overall frame of the steering unit 10. The case 12 is shaped like a cylinder extending in the first axial direction F1.

The end portion (opening) of the case 12 located on one side (+f1) in the first axial direction F1 corresponds to the upper end of the case 12 located on the steering shaft 3 side. A first plug member 12a is attached to this end portion of the case 12. Thus, the case 12 is closed by the first plug member 12a. The first plug member 12a supports, via a pair of bearings 12b, the first shaft portion 13a of the operation input shaft 13, which is located on one side (+f1) in the first axial direction F1. The operation input shaft 13 is divided into three parts: the first shaft portion 13a, second shaft portion 13b, and third shaft portion 13c, arranged in this order from one side (+f 1) in the first axial direction F1 toward the other side (-f1) in the first axial direction F1. The second shaft portion 13b is further divided into a first division 13b1 located on one side (+f1) in the first axial direction F1 and a second division 13b2 located on the other side (-f1) in the first axial direction F1. The end portion (opening) of the case 12 located on the other side (-f1) in the first axial direction F1 corresponds to the lower end of the case 12 located on the steering mechanism 6 side. A second plug member 12c is attached to this end portion of the case 12. Thus, the case 12 is closed by the second plug member 12c. The second plug member 12c supports, via a pair of bearings 12d, the third shaft portion 13c of the operation input shaft 13.

A bottomed cylindrical protrusion 12e is integrally formed on the portion of the case 12 located on one side (+f2) in the second axial direction F2 orthogonal to the first axial direction F1 (the portion located on the transmission mechanism 70 side, which is described below). The protrusion 12e is open toward one side (+f2) in the second axial direction F2. A cover 72a, described below, is attached to the protrusion 12e from one side (+f2) in the second axial direction F2. As a result, a defined internal space K1 is formed inside the protrusion 12e. The internal space K1 houses the first output shaft 16 extending along the second axial direction F2, a pair of bearings 16b supporting the first output shaft 16, and a cylindrical support portion 18 supporting the pair of bearings 16b.

A portion of the first shaft portion 13a located on the other side (-f1) in the first axial direction F1 has a bottomed tubular socket 13as opening toward the other side (-f1) in the first axial direction F1. A portion of the second shaft portion 13b located on one side (+f1) in the first axial direction F1 is inserted into the socket 13as and coupled by spline fitting or other means so as to be integrally rotatable. A portion of the second shaft portion 13b located on the other side (-f1) in the first axial direction F1 has a bottomed tubular socket 13bs opening toward the other side (-f1) in the first axial direction F1. A portion of the third shaft portion 13c located on one side (+f1) in the first axial direction F1 is inserted into the socket 13bs and coupled by spline fitting or other means so as to be integrally rotatable.

Both the first and second divisions 13b1 and 13b2 of the second shaft portion 13b are hollow. The first and second divisions 13b1 and 13b2 are penetrated by a torsion bar 13b3 along the first axis C1. The first division 13b1 and the second division 13b2 rotate integrally via the torsion bar 13b3, and undergo relative rotation corresponding to the amount of torsional deformation of the torsion bar 13b3. A sensor 19 is provided on the outer circumference of the second shaft portion 13b to detect the relative rotation of the first and second divisions 13b1 and 13b2. The detection information from the sensor 19 is input to the controller 68, which controls the drive device 65. The controller 68 calculates the steering torque and the rotation speed of the steering wheel operation based on the detection information from the sensor 19 and controls the output of the drive device 65. The driver steering the steering wheel 2 is assisted by the torque provided by the drive device 65, which is controlled by the controller 68.

The first bevel gear 14 is supported by the middle portion of the third shaft portion 13c in a coaxially and integrally rotatable manner. The first bevel gear 14 is meshed with the second bevel gear 15. The second bevel gear 15 is supported by the distal end portion of the first output shaft 16 in a coaxially and integrally rotatable manner. The first output gear 17 is supported by the first output shaft 16 in a coaxially and integrally rotatable manner. The first output gear 17 is meshed with an operating-side transmission gear 56a of the second gear mechanism 20.

The first gear mechanism 11 is configured as an orthogonal input-output mechanism by arranging the first output shaft 16 orthogonally to the operation input shaft 13. The first gear mechanism 11 operates as follows. For example, when a driver operates and thus rotates the operation input shaft 13, the rotational force of the operation input shaft 13 is transmitted to the first bevel gear 14. The rotational force of the first bevel gear 14 is transmitted to the transmission gears 56 via the second bevel gear 15, the first output shaft 16, and the first output gear 17.

The first bevel gear 14 supported by the third shaft portion 13c is in contact with the inner ring of the bearing 12d via shims 14s. The bearing 12d is located on the other side (-f1) in the first direction F1 relative to the first bevel gear 14 so as to be adjacent to the first bevel gear 14. The pair of bearings 12d are supported on the inner circumference of the second plug member 12c so as not to move in the first axial direction F1. The bearing 12d receives the thrust load of the first bevel gear 14 via the shims 14s. Thus, the backlash between the first bevel gear 14 and the second bevel gear 15 can be reduced by adjusting the thickness of the shims 14s.

### Second Gear Mechanism 20

As shown in Figs. 7, 8, and 13, the second gear mechanism 20 is configured as an eccentric oscillation transmission, for example. The second gear mechanism 20 includes a gear case 21, a gear section 40, and three crank assemblies 50. The gear case 21 houses therein the gear section 40 and the three crank assemblies 50. In this embodiment, the mechanism parts including the gear section 40 and the three crank assemblies 50 are collectively referred to as the reduction mechanism parts 20d.

The gear case 21 includes a first case (carrier case) 22 and a second case (outer tube case) 23. The first case 22 includes a fixing portion for fixing to the vehicle body. The second case 23 is cylindrically formed around the central axis (second axis) C2 of the output shaft 25 and is rotatable relative to the first case 22. The second case 23 is supported on the outer circumference of the first case 22 via a pair of main bearings 24 spaced apart from each other in the axial direction. The second case 23 is an example of an output member of the second gear mechanism 20. When the first case 22 is fixed to a support member in a vehicle body or the like, the second case 23 serves an output member.

The first case 22 includes a base portion 27, an end plate portion 28, a positioning pin 29 and a fixing bolt 31. The first case 22 as a whole is formed in a cylindrical shape coaxial with the output shaft 25. The first case 22 serves as a carrier that supports the three crank assemblies 50. The base portion 27 includes a base plate portion 32 and three shaft portions 33. The three shaft portions 33 each extend from the base plate portion 32 toward the other side (-f2) in the second axial direction F2. The end plate portion 28 is attached to the base portion 27 on the axially opposite side to the base plate portion 32. The three shaft portions 33 extend through the gear section 40 and are connected to the end plate portion 28.

The distal end surface of each of the three shaft portions 33 has a screw hole 35 and a reaming hole 36 formed therein. The positioning pin 29 is inserted into the reaming hole 36. This in turn accurately positions the end plate portion 28 relative to the base portion 27. The fixing bolt 31 is screwed into the screw hole 35. This secures the end plate portion 28 to the base portion 27. A flange 37 is attached to a portion of the base plate portion 32, which forms the first case 22, on one side (+f2) in the second axial direction F2. An oil chamber R1 that houses the reduction mechanism parts 20d of the second gear mechanism 20 is formed between the flange 37 and a disc 25a provided on the proximal end side of the output shaft 25. A specified amount of gear oil is stored in the oil chamber R1 to enable lubrication of the reduction mechanism parts 20d.

The end portion of the second case 23 which is located on the other side (-f2) in the second axial direction F2 is secured to the outer circumferential portion of the disc 25a by a plurality of bolts B1 arranged circumferentially. The flange 37 has a bottomed tubular recess 37a1. The end portion of the second case 23 which is located on one side (+f2) in the second axial direction F2 is in the opening of the recess 37a1. An oil seal 23c is interposed between the outer circumference of the end portion of the second case 23 that is located on one side (+f2) in the second axial direction F2 and the inner circumference of the opening of the recess 37a1 in the flange 37. An oil seal 45c is interposed between the outer circumference of the second input shaft 45 and the inner circumference of a shaft insertion hole in the flange 37.

The oil chamber R1 communicates with the internal space K1 in the protrusion 12e of the case 12 of the first gear mechanism 11 through the space containing the meshing portion between the transmission gears 56 and the first output gear 17 of the first gear mechanism 11. Therefore, the internal space K1 in the protrusion 12e is a communication space that communicates with the oil chamber R1. In contrast, the cylindrical internal space that contains the bevel gear in the case 12 is the separation space K2, which is oil-tightly separated from the internal space K1 by an oil seal 16c.

The rotational speeds of the gears in the first gear mechanism 11 are lower than those in the second gear mechanism 20. Therefore, the gear housings are not configured as the oil chamber R1, and grease or the like is applied to each gear. This reduces the amount of oil to be filled in the steering unit 10, thereby reducing weight and cost, as well as friction caused by oil agitation in low-temperature environments.

When an oil chamber R1 is formed in the first gear mechanism 11, it may be necessary to provide a dedicated oil seal around sensors installed in the first gear mechanism 11 to prevent oil from adhering to the sensors. In contrast, in this embodiment, the first gear mechanism 11 does not have an oil chamber R1, and thus only a conventional oil seal 16c is required between the first gear mechanism 11 and the second gear mechanism 20. Accordingly, cost reduction can be achieved in this respect as well.

On the outer side of the flange 37, a plurality of fastening bosses 37b, which serve for fixing to the vehicle body, are provided. Each fastening boss 37b is formed, for example, in a cylindrical shape extending along the second axial direction F2. As shown in Figs. 8 and 13, the second case 23 includes a plurality of internal tooth pins (internal teeth) 26 on the inner circumferential surface thereof. The internal tooth pins 26 are columnar members extending parallel to each other along the second axis C2. The internal tooth pins 26 are fitted in pin grooves formed in the inner wall of the second case 23. The internal tooth pins 26 are appropriately retained by the second case 23. The internal tooth pins 26 are retained so as to be rotatable around respective axes (axes parallel to the second axis C2).

The plurality of internal tooth pins 26 are arranged at regular intervals in the circumferential direction around the second axis C2. Each internal tooth pin 26 has a semicircle surface projecting from the inner wall of the second case 23 toward the inner side. The internal tooth pins 26 serve as internal teeth meshing with the external teeth of the gear section 40.

The gear section 40 is disposed between the base plate portion 32 and the end plate portion 28.

The gear section 40 includes two oscillating gears (external tooth members) 41 and 42. The oscillating gear 41 is disposed between the base plate portion 32 and the oscillating gear 42. The oscillating gear 41 has external teeth meshing with the plurality of internal tooth pins 26. The oscillating gear 42 is disposed between the end plate portion 28 and the oscillating gear 41. The oscillating gear 42 has external teeth meshing with the plurality of internal tooth pins 26. The external teeth of the oscillating gears 41, 42 are shaped like smooth and continuous waves extending along the entire circumference of the oscillating gears 41, 42.

The oscillating gears 41, 42 each have a number of external teeth that is different from that of the internal teeth by one, for example. This ensures a large reduction ratio and a large number of simultaneously meshing teeth. This makes the speed reducer compact and lightweight, yet rigid and resistant to overload. In addition, the speed reducer can have a small backlash and high responsiveness and controllability (positional accuracy). The arc profiles of the internal teeth are formed by a plurality of columns (internal tooth pins 26). Since each column can rotate around respective central axis, the sliding contact of the external teeth against the internal teeth is converted to rolling contact accomplished by the rotation of the columns, resulting in a low friction loss and a high efficiency of the speed reducer.

The two oscillating gears 41 and 42 have the same shape and size. The two oscillating gears 41 and 42 perform revolution movement within the second case 23 while meshing with the internal tooth pins 26 of the second case 23. During this movement, respective centers of the two oscillating gears 41 and 42 circle around the second axis C2. This movement of the oscillating gears 41 and 42 is defined as "oscillatory rotation."

As the oscillating gears 41 and 42 rotate oscillatorily, the respective centers of the oscillating gears 41 and 42 circle around the second axis C2. Every time the oscillating gears 41 and 42 make one full revolution, each of the oscillating gears 41 and 42 generates a relative rotation between the oscillating gear 41, 42 and the second case 23 by an angle corresponding to the difference in the number of teeth between the external teeth of the oscillating gear 41, 42 and the internal teeth (internal tooth pins 26) of the second case 23.

The two oscillating gears 41 and 42 are 180 degrees out of phase in their revolution. When the oscillating gear 41 meshes with half of the internal tooth pins 26, the oscillating gear 42 meshes with the remaining half of the internal tooth pins 26. Thus, the gear section 40 generates a relative rotational torque between the first case 22 and the second case 23 at two points at which the oscillating gears 41 and 42 mesh with the second case 23.

Each of the three crank assemblies 50 includes a crankshaft 51, four bearings 52, 53, 54 and 55 and a transmission gear 56. The three crank assemblies 50 are arranged at regular intervals in the circumferential direction around the second axis C2. The lines C2a in the drawings represent the central axes of rotation (crank axes) of crankshafts 51. Each crank axis C2a is parallel to the second axial direction F2 and is parallel to the second axis C2.. Each crankshaft 51 rotates around the respective crank axis C2a.

Each crankshaft 51 includes two journals (crank journals) 58, 59 and two eccentric portions (eccentric members) 61, 62. The two journals 58 and 59 are each formed in a columnar shape centered on the crank axis C2a. The journal 58 located on one side (+f2) in the second axial direction F2 is supported by the base portion 27 via the first bearing 52. The journal 59 located on the other side (-f2) in the second axial direction F2 is supported by the end plate portion 28 via the second bearing 53.

Each crankshaft 51 has two eccentric portions 61, 62 formed between the two journals 58, 59. The two eccentric portions 61, 62 have a respective central axis eccentric to the corresponding crank axis C2a. The two eccentric portions 61, 62 are formed in a columnar shape eccentric to the two journals 58, 59.

The eccentric portion 61 located on one side (+f2) in the second axial direction F2 is inserted into the third bearing 54. The eccentric portion 61 and the third bearing 54 are inserted through the crank insertion hole of the oscillating gear 41 located on one side (+f2) in the second axial direction F2. The oscillating gear 41 located on one side (+f2) in the second axial direction F2 is moved eccentrically by the rotation of the eccentric portion 61 located on one side (+f2) in the second axial direction F2. The eccentric portion 62 located on the other side (-f2) in the second axial direction F2 is inserted into the fourth bearing 55. The eccentric portion 62 and the fourth bearing 55 are inserted through the crank insertion hole of the oscillating gear 42 located on the other side (-f2) in the second axial direction F2. The oscillating gear 42 located on the other side (-f2) in the second axial direction F2 is moved eccentrically by the rotation of the eccentric portion 62 located on the other side (-f2) in the second axial direction F2.

Each of the transmission gears 56 is meshed with the second input gear 46, which is coaxial with the second input shaft 45. The second input gear 46 is, for example, integrally formed on the outer circumference of the second input shaft 45. The second input shaft 45 is coaxial and integral with the output shaft of the transmission mechanism 70 (transmission output shaft 76b). The second input gear 46 also serves as a transmission output gear 76c (see Fig. 7), which is integrally formed on the transmission output shaft 76b.

The driven pulley support shaft 76a, which is connected to the portion of the transmission output shaft 76b located on one side (+f2) in the second axial direction F2, is rotatably supported via a bearing 37d on the shaft support portion 37c of the flange 37, which closes the gear case on one side (+f2) in the second axial direction F2. The shaft portion 47, which is connected to the portion of the second input shaft 45 located on the other side (-f2) in the second axial direction F2, extends into the second gear mechanism 20 beyond the transmission gears 56 in the second axial direction F2. The shaft portion 47 is supported via a bearing 21d on the shaft support portion 21c of the gear case 21 (e.g., the base plate portion 32) of the second gear mechanism 20.

The three transmission gears 56 provided on the crankshafts 51 are arranged at regular intervals in the circumferential direction around the second input gear 46 and are each engaged with the second input gear 46. The three transmission gears 56 are arranged such that, when viewed in the second axial direction F2, the imaginary lines connecting their centers form a triangle (see Fig. 7). The second input gear 46 has a smaller diameter than the transmission gears 56. Each transmission gear 56 decelerates the rotation input from the second input gear 46. The three transmission gears 56 are located, when viewed in the second axial direction F2, inside the circular outline A2 of the second gear mechanism 20. The output of the drive device 65, which is decelerated through the transmission mechanism 70, is transmitted to the second input gear 46.

Among the three transmission gears 56, the transmission gear 56a located on the first gear mechanism 11 side (hereinafter referred to as the operating-side transmission gear) has its central axis (crank axis C2a) positioned on an imaginary plane S1, which is represented as a straight line in Fig. 5. The imaginary plane S1 is a plane along the second axial direction F2 and the third direction F3 and orthogonal to the first axial direction F1. The operating-side transmission gear 56a is meshed with the first output gear 17 of the first gear mechanism 11. The first output gear 17 has a larger diameter than the operating-side transmission gear 56a. The operating-side transmission gear 56a increases the speed of the rotation input from the first output gear 17.

The driving force generated by the drive device 65 is input to each transmission gear 56 via the transmission mechanism 70. With one of the three transmission gears 56 (the operating-side transmission gear 56a) used as an input gear that receives rotation from both the first gear mechanism 11 and the drive device 65, it is possible to reduce the number of components and achieve a more compact design compared to the case where separate input gears are provided for the first gear mechanism 11 and the drive device 65.

As the driving force from the drive device 65 is input to the transmission gears 56, the crankshafts 51 rotate around the respective crank axes C2a. As a result, the two eccentric portions 61, 62 of each crankshaft 51 rotate eccentrically around the corresponding crank axis C2a. When viewed in the second axial direction F2, the first output gear 17 extends beyond the outline A2 of the second gear mechanism 20 and meshes with the operating-side transmission gear 56a.

The two oscillating gears 41, 42, which are connected to the eccentric portions 61, 62, rotate oscillatorily within the circular space defined by the second case 23. Each of the two oscillating gears 41 and 42 meshes with the internal tooth pins 26 of the second case 23. Thus, the oscillatory rotation of the two oscillating gears 41, 42 generates a relative rotational motion between the first case 22 and the second case 23. The eccentric rotation of the crankshafts 51 causes the oscillating gears 41, 42 to rotate oscillatorily, resulting in output rotation having a lower speed than the input rotation.

In the steering unit 10 of this embodiment configured as described above, when the steering wheel 2 is operated rotationally, the steering force is transmitted through the first gear mechanism 11 to one of the three transmission gears 56 (operating-side transmission gear 56a). In this power transmission process, the steering force is increased in speed because the first output gear 17 of the first gear mechanism 11 has a larger diameter than the transmission gears 56. The steering force input to one of the three transmission gears 56 (operating-side transmission gear 56a) is also transmitted to the other two transmission gears 56 via the second input gear 46.

At this time, the sensor 19 in the first gear mechanism 11 detects the torsion of the operation input shaft 13. The controller 68 causes the drive device 65 to drive according to the detection information from the sensor 19. The driving force of the drive device 65 is then decelerated by the transmission mechanism 70 and transmitted to the second input shaft 45, and further transmitted from the second input gear 46 to the three transmission gears 56. Therefore, in the power transmission process from the second input gear 46 to the transmission gears 56, the driving force of the drive device 65 is decelerated.

The second gear mechanism 20 eccentrically rotates the first eccentric portion 61 and the second eccentric portion 62 of each crankshaft 51 by the combined force of the steering force and the motor driving force input to each transmission gear 56. As a result, the first and second oscillating gears 41 and 42 rotate oscillatorily with a predetermined phase difference. In the event of a failure of the drive device 65 or the drive circuits 68b and 68c, the assisting torque provided by the drive device 65 is zero or reduced, and the steering force rotates the crankshafts 51 to cause oscillatory rotation of the first and second oscillating gears 41 and 42.

The first oscillating gear 41 and the second oscillating gear 42 rotate oscillatorily within the second case 23, while their first and second external teeth move over the internal tooth pins 26. This creates a relative rotation greatly decelerated compared to the input rotation, between the first case 22, which supports the first and second oscillating gears 41 and 42, and the second case 23, which retains the internal tooth pins 26. One of the first case 22 and the second case 23 is fixed to a support member in the vehicle body or the like, and the other is configured as an output member, and thus the eccentric oscillation gear device can greatly decelerate the input rotation and output the decelerated rotation.

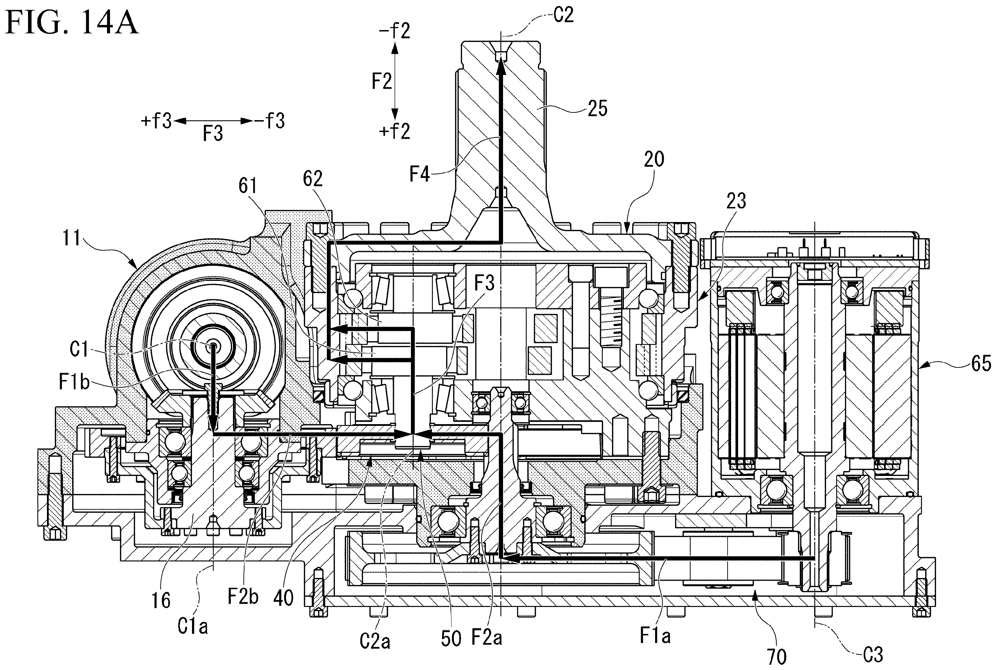

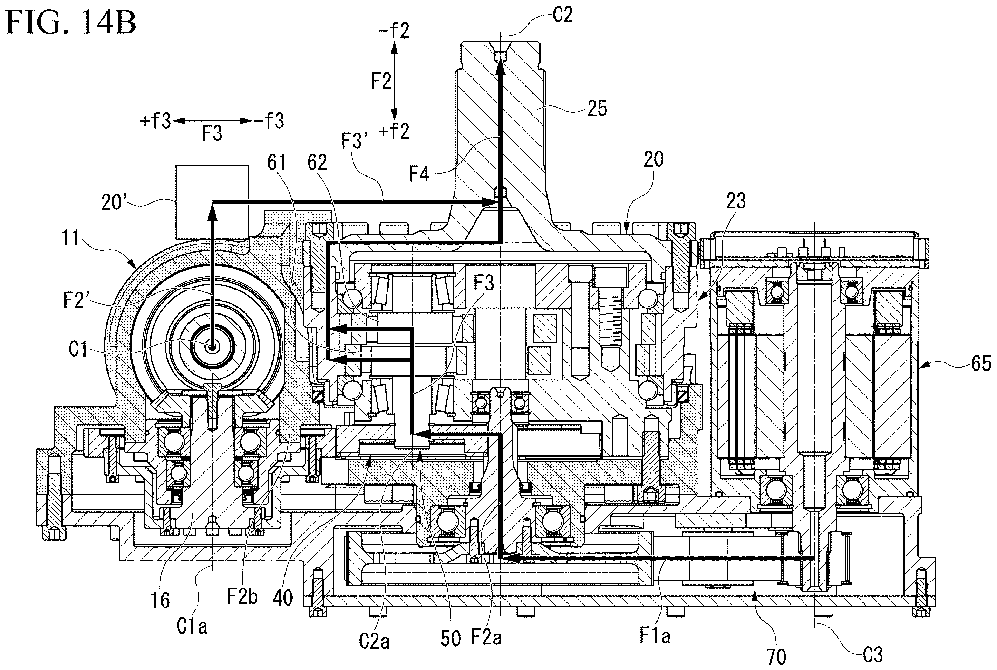

With reference to Figs. 14A and 14B, the power transmission of the present embodiment is compared with that of a conventional art. As shown in Fig. 14B, in a conventional art (e.g. European Patent No. EP 3 347 258 B1), the transmission mechanism (rack and pinion type or the like) 20' on the column side (steering shaft 3 side) is coupled to the output side (second output shaft 25) of the speed reducer (second gear mechanism 20) on the motor side (drive device 65 side). The torque from the motor side is decelerated through the second gear mechanism 20, as shown by arrows F1a, F2a, and F3, and transmitted to the output shaft 25, as shown by arrow F4. The torque from the column side is decelerated as necessary through the transmission mechanism 20', as shown by arrows F2' and F3', and transmitted to the output shaft 25, as shown by arrow F4.

In the conventional configuration shown in Fig. 14B, the backlashes generated at the input sides on the motor side and on the column side are transmitted to the output side via the second gear mechanism 20 and the transmission mechanism 20'. In particular, the backlash of the transmission mechanism 20' itself on the column side, such as a rack-and-pinion type, is transmitted to the output side of the speed reducer on the motor side without being decelerated. Therefore, the backlash (hysteresis loss) on the output side of the speed reducer on the motor side is larger than in the steering unit 10 of the present embodiment.

As shown in Fig. 14A, in the steering unit 10 of the present embodiment, the speed reducer (first gear mechanism 11) on the column side (steering shaft 3 side) is coupled to the input side of the speed reducer (second gear mechanism 20) on the motor side (drive device 65 side). The torque from the motor side is decelerated through the second gear mechanism 20, as shown by arrows F1a, F2a, and F3, and transmitted to the output shaft 25, as shown by arrow F4. The torque from the column side is decelerated through the second gear mechanism 20, as shown by arrows F1b, F2b, and F3, and transmitted to the output shaft 25, as shown by arrow F4.

In the conventional configuration shown in Fig. 14B, the torque transmitted from the column side (steering shaft 3 side) to the output shaft 25 (arrows F2', F3') does not go through the speed reducer (second gear mechanism 20) on the motor side. Therefore, the load from the wheel side received by the output shaft 25 is directly transmitted to the transmission mechanism 20' on the column side. Therefore, the transmission mechanism 20' on the column side requires a high strength design and thus tends to have a large size.

By contrast, in the steering unit 10 of the present embodiment shown in Fig. 14A, the torque from the column side is decelerated through the second gear mechanism 20, as shown by arrows F1b, F2b, and F3, and transmitted to the output shaft 25, as shown by arrow F4. As a result, the torque from the column side is reduced by the reduction ratio of the speed reducer (second gear mechanism 20) on the motor side, particularly by the number of internal tooth pins 26. In addition, the load from the wheel side received by the output shaft 25 is transmitted to the first output shaft 16 of the first gear mechanism 11 via the second gear mechanism 20. At this time, the torque applied to the first bevel gear 14, the second bevel gear 15, the first output shaft 16, and the first output gear 17 of the first gear mechanism 11 is smaller than the torque applied to the output shaft of the transmission mechanism 20' on the column side in the conventional configuration shown in Fig. 14B. Therefore, the first bevel gear 14, second bevel gear 15, first output shaft 16, and first output gear 17 of the first gear mechanism 11 can be downsized.

Furthermore, in the steering unit 10 of the present embodiment shown in Fig. 14A, the second gear mechanism 20 receives both the load from the wheel side and the load from the motor side. Therefore, it is sufficient to enhance the strength design of the second gear mechanism 20. Therefore, the first gear mechanism 11, including the first output shaft 16 and related components, can be downsized by reducing its strength requirements. Thus, it is possible to achieve downsizing of the entire device by transmitting the torque from the column side to the output shaft 25 through the speed reducer (second gear mechanism 20) on the motor side.

The steering unit 10 of the present embodiment shown in Fig. 14A is particularly advantageous in the event of a failure of the drive device 65. In the present embodiment, during normal operation, the torque from the column side is transmitted to the output shaft 25 through the second gear mechanism 20, as indicated by arrows F1b, F2b, F3, and F4. In the conventional configuration shown in Fig. 14B, during normal operation, the torque from the column side is transmitted to the output shaft 25 through a transmission mechanism 20', which is separate from the second gear mechanism 20, as shown by arrows F2', F3' and F4. In both configurations shown in Figs. 14A and 14B, the torque from the motor side, which is larger than the torque from the column side, is transmitted to the output shaft 25 through the second gear mechanism 20, as indicated by arrows F1a, F2a, F3, and F4.

On the other hand, in the event of a failure of the drive device 65, only the torque from the column side is transmitted to the output shaft 25 in both configurations shown in Figs. 14A and 14B. At this time, in the conventional configuration shown in Fig. 14B, the torque from the column side is transmitted to the output shaft 25 through a transmission mechanism 20', not through the second gear mechanism 20, as shown by arrows F2', F3' and F4. In other words, the transmission mechanism 20' on the column side directly receives the torque transmitted from the column side and to be transmitted to the output shaft 25. Therefore, the transmission mechanism 20' on the column side may need to be designed with high strength to receive the torque to be transmitted to the output shaft 25, possibly resulting in an increase in size.

By contrast, in the steering unit 10 of the present embodiment shown in Fig. 14A, the torque from the column side is transmitted through the second gear mechanism 20 to the output shaft 25, as indicated by arrows F1b, F2b, F3, and F4. Thus, the torque applied to the first output shaft 16 and the related components of the first gear mechanism 11 is reduced by the reduction ratio of the speed reducer (second gear mechanism 20) on the motor side, particularly by the number of internal tooth pins 26. Therefore, when the strength design of the second gear mechanism 20 is enhanced, the first gear mechanism 11 - including the first bevel gear 14, the second bevel gear 15, the first output shaft 16, and the first output gear 17 - has the advantage of not requiring a high-strength design. As a result, it is possible to downsize the first gear mechanism 11, and compared to the case where both gear mechanisms on the column side and the motor side are designed for high strength, the overall device can be more compact.

Backlash occurring on the motor side and column side at the input side of the second gear mechanism 20 is significantly decelerated and transmitted through the speed reducer. The second gear mechanism 20 is an eccentric oscillation speed reducer. The oscillating gears of the second gear mechanism 20 are trochoid gears in which a plurality of the external teeth can simultaneously contact a plurality of the internal teeth of the second case 23. In an eccentric oscillation speed reducer, the backlash (hysteresis loss) on the output side is extremely small because the backlash of the gear mechanism itself is small. Furthermore, in this embodiment, the internal teeth are each formed by a column that can rotate around its own axis. Thus, the sliding contact of the external teeth against the internal teeth is converted to rolling contact accomplished by the rotation of the columns, resulting in a low friction loss and a high efficiency of the gear mechanism.

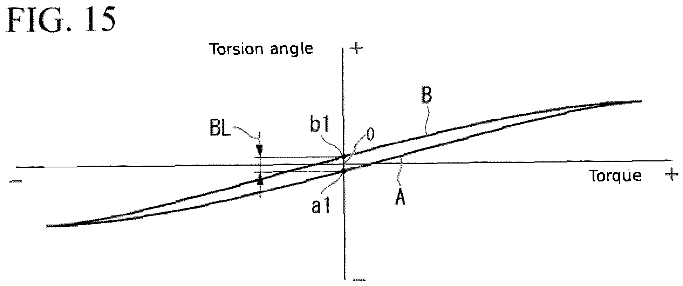

Fig. 15 is a graph showing the transition of the torsion angle with respect to torque (hysteresis curve), in which the vertical axis represents the torsion angle of the speed reducer and the horizontal axis represents the torque applied to the output shaft. As shown in Fig. 15, when the input shaft of the speed reducer is fixed and torque is applied to the output shaft, torsion occurs within the speed reducer. In this case, the backlash (hysteresis loss) can be read from the transition (hysteresis curve) of the amount of torsion (torsion angle) within the speed reducer. The backlash (hysteresis loss) corresponds to the difference between the torsion angle a1 at zero torque occurring when the load torque changes from negative to positive (curve A) and the torsion angle b1 at zero torque occurring when the load torque changes from positive to negative (curve B).

### Transmission Mechanism 70

As shown in Figs. 2 and 3, the transmission mechanism 70 is provided on the portion of the unit case 10c located on one side (+f2) in the second axial direction F2. The transmission mechanism 70 transmits the motive power of the drive device 65 to the second input shaft 45 of the second gear mechanism 20. The transmission mechanism 70 extends from the drive device 65 to the second gear mechanism 20, as viewed from the axial direction along the second axial direction F2.

The transmission mechanism 70 includes a transmission case 71, drive pulley 75, driven pulley 76, transmission belt 77, and tensioner 78. In this embodiment, the mechanical parts including the drive pulley 75, driven pulley 76, transmission belt 77, and tensioner 78 are collectively referred to as the transmission mechanical parts 70d.

The transmission case 71 includes a case body 72 and a case cover 73. The case body 72 is fixed by bolts B3 to the portion of the flange 37 located on one side (+f2) in the second axial direction F2. The case cover 73 closes the open portion of the case body 72 that is located on one side (+f2) in the second axial direction F2. Fig. 2 does not show the case cover 73. The portion of the case body 72 located on one side (+f3) in the third direction F3 is integrated with a cover portion 72a that, as viewed from the second axial direction F2, extends from the housing of the driven pulley 76 to a position overlapping the first gear mechanism 11 (not overlapping the second gear mechanism 20). The cover portion 72a closes the open portion of the protrusion 12e in the case 12 of the first gear mechanism 11 on one side (+f2) in the second axial direction F2.

The cover portion 72a has a plurality of fasteners 72b for fastening to the case 12 at the outer circumference as viewed from the second axial direction F2. The cover portion 72a has a protuberance 72c on the inner circumference as viewed from the axial direction, and the protuberance 72c protuberates toward one side (+f2) in the second axial direction F2 beyond the fasteners 72b.

The protuberance 72c covers the distal end of the first output shaft 16 of the first gear mechanism 11 on one side (+f2) in the second axial direction F2. The protuberance 72c is formed within the width H4 of the main part (excluding partial protrusions) of the transmission case 71 in the second axial direction F2, so as not to increase the size in the second axial direction F2. The width H4 falls within a region extending, for example, from the side surface 37a2 of the flange 37 located on one side (+f2) in the second axial direction F2 to the distal end of the transmission case 71 located on one side (+f2) in the second axial direction F2.

The internal space K1 is formed inside the protuberance 72c. The internal space K1 communicates with the oil chamber R1 within the gear case 21 of the second gear mechanism 20. The internal space K1 is formed outside of the outline A2 of the second gear mechanism 20, as viewed from the second axial direction F2. The presence of the internal space K1 makes it easier to maintain the proportion of space (excess space not filled with oil) to the total volume of the oil chamber.

On the other hand, in the transmission case 71, the internal space housing the transmission mechanism parts 70d is a second separation space K3, which is oil-tightly separated from the oil chamber R1 of the second gear mechanism 20 by the oil seal 45c. With the transmission mechanism 70 maintained oil-free, reliable power transmission by the transmission belt 77 can be achieved, while eliminating the need for an oil seal on the drive device 65 side.

The drive pulley 75 is located coaxially with the drive shaft 67 of the drive device 65 and is attached to a drive pulley support shaft 75a, which is provided to extend the drive shaft 67, so as to be integrally rotatable. The driven pulley 76 is located coaxially with the second input shaft 45 of the second gear mechanism 20 and is attached to a driven pulley support shaft 76a, which is provided to extend the second input shaft 45, so as to be integrally rotatable.

The driven pulley 76 has a larger diameter than the drive pulley 75, and decelerates the rotation input from the drive pulley 75. The transmission mechanism 70 decelerates the output of the drive device 65 and transmits it to the second gear mechanism 20. Although simplified in the drawings, the transmission belt 77 is a toothed belt, for example. Thus, the transmission belt 77 can transmit torque reliably.

Inside the transmission case 71, a second separation space K3 is formed, which is separated from the oil chamber R1 within the second gear mechanism 20 by an oil seal 45c provided on the outer circumference of the second input shaft 45 and an O-ring 37c1 provided on the outer circumference of the shaft support portion 37c of the flange 37. In this embodiment, the oil seal 45c and the O-ring 37c1 are collectively referred to as the second oil seal. The second separation space K3 is oil-free, which prevents the transmission belt 77 from slipping. The second separation space K3 contains the drive shaft 67 of the drive device 65. With no oil seal on the outer circumference of the drive shaft 67, oil does not enter the drive device 65.

### Case Flange Molding 38

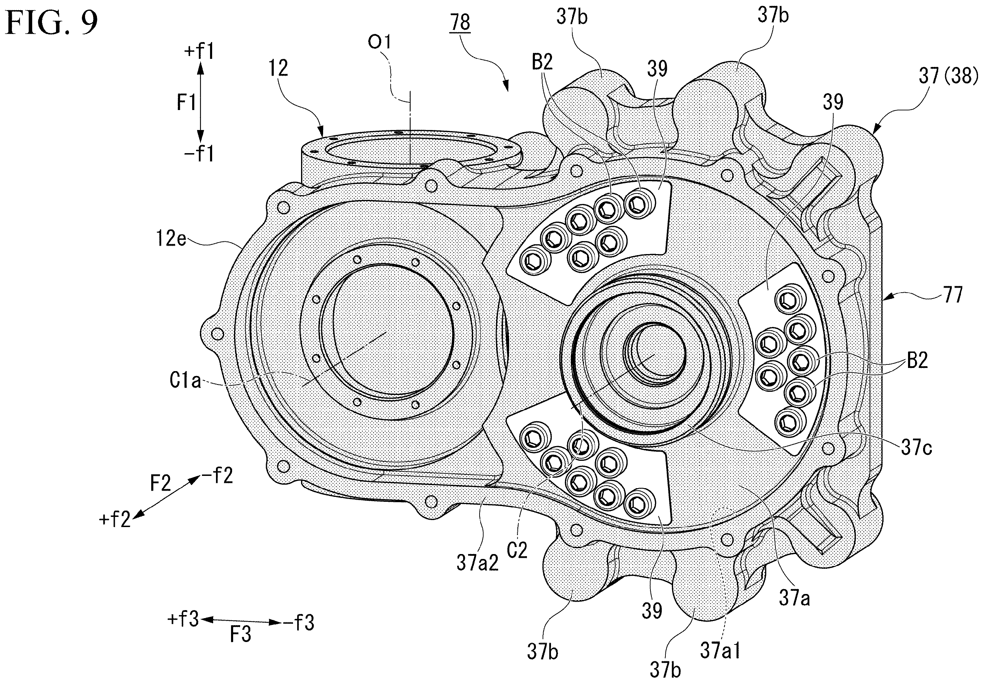

Fig. 9 is a perspective view showing a case flange molding 38 formed integrally of the flange 37 and the case 12 constituting a part of the unit case 10c, and washer plates 39 attached to the case flange molding 38. As shown in Fig. 9, the flange 37 includes the case 12 of the first gear mechanism 11 and is integrally formed of the same material as the case 12. The flange 37 and the case 12 constitute a molding (case flange member 38) integrally formed by casting or other means. The flange 37, which is made of aluminum alloy, has a shallow, bottomed tubular recess 37a1. Furthermore, the flange 37 includes a base plate portion 37a that closes one axial end of the case of the second gear mechanism 20, and a plurality of fastening bosses 37b that protrude from the outer circumference of the base plate portion 37a.

The case 12 is positioned on one side (+f3) in the third direction F3 relative to the base plate portion 37a and also positioned on the other side (-f2) in the second axial direction F2 relative to the base plate portion 37a. The protrusion 12e formed on the portion of the case 12 located on one side (+f2) in the second axial direction F2 is continuous to the portion of the base plate portion 37a in the flange 37 on one side (+f3) in the third direction F3. The protrusion 12e and the base plate portion 37a form an opening periphery that is continuous along a plane (side surface) perpendicular to the second axial direction F2.

The base plate portion 37a has a plurality of fastening bolts B2 attached thereto for fixing the first case 22 (carrier) of the gear case 21 of the second gear mechanism 20. The plurality of fastening bolts B2 are arranged in three regions, each containing a specified number (seven) of fastening bolts B2, so as not to overlap the three transmission gears 56, as viewed from the second axial direction F2. The washer plates 39, each shaped like a fan as viewed from the second axial direction F2, are provided so as to correspond to the specified number of fastening bolts B2,

Each washer plate 39 is made of ferrous material, including steel, and is harder than the case flange member 38. Each washer plate 39 has a plurality of insertion holes through which the specified number of fastening bolts B2 are inserted. Each washer plate 39 is formed as a plate with a large area that includes not only the bolt seating surfaces of the individual fastening bolts B2, but also the areas between adjacent fastening bolts B2 and the areas outside the bolt insertion region, and contacts one side surface of the base plate portion 37a.

With this arrangement, the washer plates 39 reduce the surface pressure on the case flange member 38 due to bolt fastening, thereby inhibiting deformation of the case flange member 38, which is made of aluminum alloy or other light alloy, even when the fastening bolts B2 are tightened with the specified tightening torque. Thus, the first case 22 of the second gear mechanism 20 can be securely fixed to the case flange member 38.

### Inverted Position of First Gear Mechanism 11

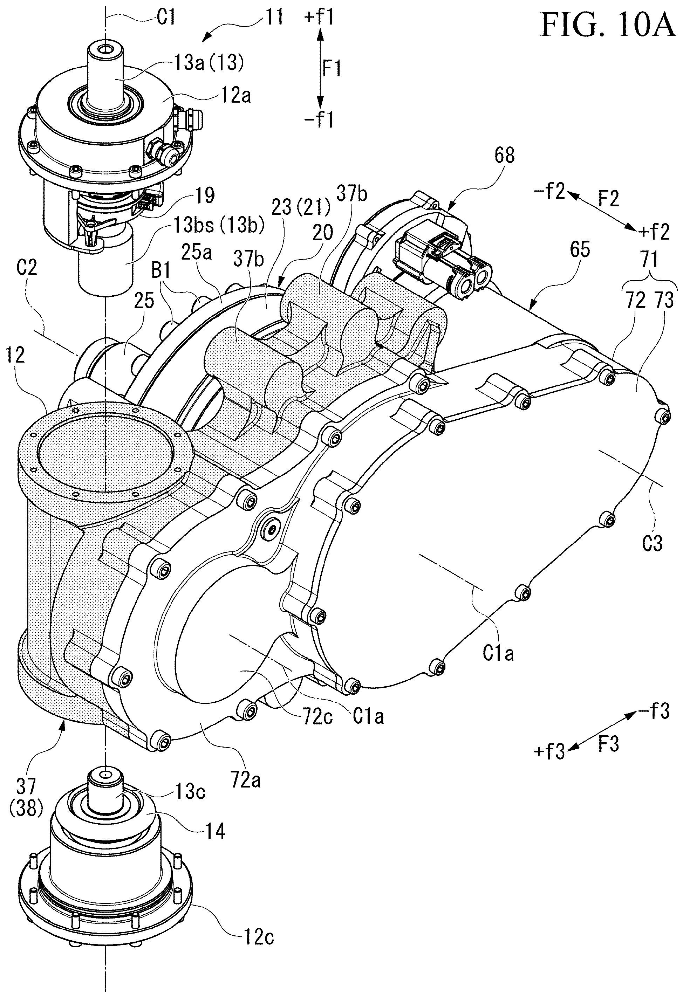

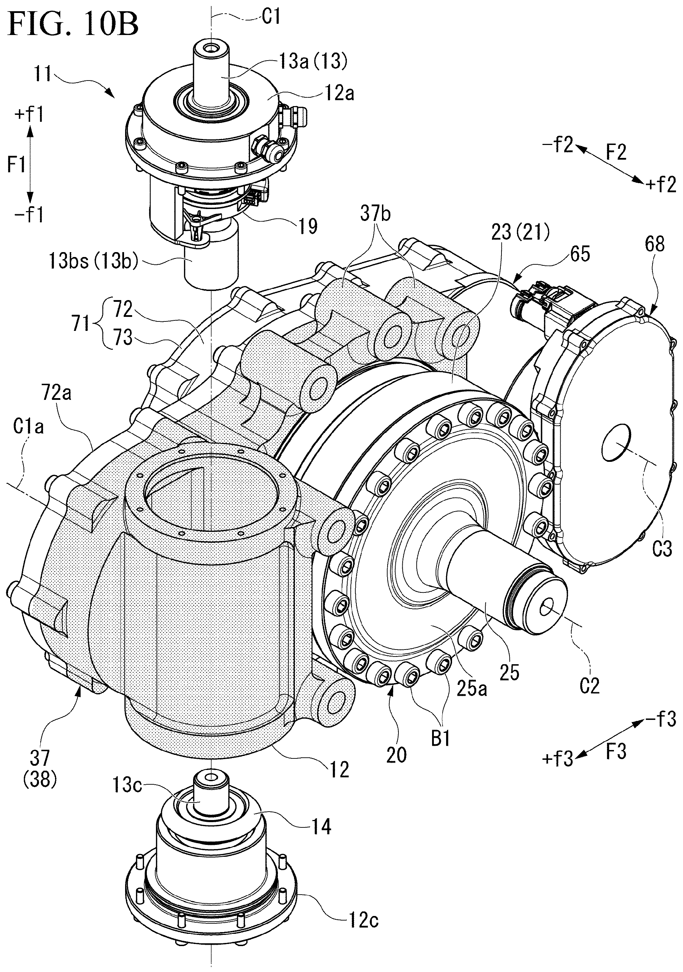

Fig. 10A is a perspective view showing the conversion mechanism parts 11d of the first gear mechanism 11, the conversion mechanism parts 11d being separated from the case 12. Fig. 10B is a perspective view showing the case flange member 38 being inverted in the first axial direction F1 relative to Fig. 10A. As shown in Figs. 10A and 10B, the conversion mechanism parts 11d of the first gear mechanism 11 are separable in the axial direction of the operation input shaft 13 (first axial direction F1).

In the first gear mechanism 11, the socket 13bs of the second shaft portion 13b can be inserted into and removed from the third shaft portion 13c by relative movement along the first axial direction F1. The mechanical parts of the socket 13bs located on one side (+f 1) in the first axial direction F1 form a first assembly including the first plug member 12a and the sensor 19. The first assembly can be attached to and detached from the case 12 on one side (+f 1) in the first axial direction F1 along the first axial direction F1. The mechanical parts of the socket 13bs located on the other side (-f1) in the first axial direction F1 form a second assembly including the second plug member 12c and the first bevel gear 14. The second assembly can be attached to and detached from the case 12 on the other side (-f1) in the first axial direction F1 along the first axial direction F1.

The case 12 has openings on both sides in the first axial direction F1, which are symmetrical to each other in the first axial direction F1. The central axis (orthogonal axis C1a) of the second bevel gear 15 and the first output shaft 16 are located in the middle of the case 12 in the first axial direction F1. The central axis C1a of the second bevel gear 15 is positioned to intersect the central axis (first axis C1) of the first bevel gear 14. The second bevel gear 15 can mesh with the first bevel gear 14, irrespective of the side in the first axial direction F1 from which the second assembly is attached to the case 12. Furthermore, when the second assembly is attached from either one of the sides of the case 12 in the first axial direction F1, the first assembly can be attached from the opposite side of the case 12 in the first axial direction F1, thereby coupling the socket 13bs of the second shaft portion 13b to the third shaft portion 13c. Accordingly, the first gear mechanism 11 can be attached to the case 12 in either a prescribed position (see, for example, Fig. 10A) or an inverted position in which the first axial direction F1 is inverted relative to the prescribed position (see, for example, Fig. 10B).

The case flange member 38 is symmetrical with respect to the imaginary plane S1 (see Fig. 5) along the second axial direction F2 and the third direction F3. In Figs. 10A and 10B, the position of the first gear mechanism 11 is not inverted, but the position of the case flange member 38 is inverted. As shown in Figs. 10A and 10B, the case flange member 38 (steering unit 10) can be installed on a vehicle in an inverted position, such that the steering unit 10 can be installed on both right-hand drive and left-hand drive vehicles.

Typically, the steering unit 10 requires modification in the layout of the input/output sections when accommodating differences between right-hand drive and left-hand drive configurations. For this reason, the steering unit 10 may have dedicated frames for right-hand drive and left-hand drive configurations.

By contrast, the steering unit 10 of this embodiment allows for the inverted position of the first gear mechanism 11, and the case flange member 38 is symmetrical with respect to the imaginary plane S1 along the second axial direction F2 and the third direction F3 (a plane orthogonal to the first axial direction F1). Thus, as shown in Figs. 10A and 10B, the steering unit 10 can be installed on a vehicle in an inverted position. This makes it possible to achieve a layout of input/output sections that accommodates the differences between right-hand drive and left-hand drive configurations while using common parts, by reconfiguring the case flange member 38 and the first gear mechanism 11 in accordance with either the right-hand drive or left-hand drive configuration.

As described above, the steering unit 10 according to the present embodiment includes: the first gear mechanism 11, which receives rotation of steering wheel operation and converts the direction of this rotation to output the converted rotation as a primary rotation; and the second gear mechanism 20, which receives the primary rotation output from the first gear mechanism 11 and decelerates the primary rotation to output decelerated rotation. The first gear mechanism 11 is located so that at least a portion of it falls within the width H2 of the second gear mechanism 20 along the axial direction (second axial direction F2) of the output shaft (second output shaft 25) of the second gear mechanism 20. With this configuration, the first gear mechanism 11 (operating mechanism) for converting the rotational direction of the steering wheel operation, and the second gear mechanism (speed reducer) 20 for decelerating the output of the first gear mechanism 11 can be arranged so as to overlap each other along the second axial direction F2 of the second gear mechanism 20. Thus, the thickness of the entire device in the second axial direction F2 can be reduced for downsizing.

The steering unit 10 also includes the drive device 65 that outputs a driving force to assist the steering wheel operation. The drive device 65 is located so that at least a portion of it falls within the width H2 of the second gear mechanism 20 along the second axial direction F2. According to this configuration, the drive device 65 (assist motor) that outputs the steering assist force can also be arranged to overlap the second gear mechanism 20 in the second axial direction F2 of the second gear mechanism 20. Thus, the thickness of the entire device including the drive device 65 in the second axial direction F2 can be reduced for further downsizing.

In the steering unit 10, the second gear mechanism 20 includes a primary input gear (operating-side transmission gear 56a) that is located inside the outline A2 as viewed from the second axial direction F2. The first gear mechanism 11 includes the first output gear 17 having a larger diameter than the operating-side transmission gear 56a. The first output gear 17 is meshed with the operating-side transmission gear 56a. According to this configuration, the second gear mechanism 20 is downsized by positioning the operating-side transmission gear 56a inside the outline A2 of the second gear mechanism 20 as viewed from the second axial direction F2. The first output gear 17 of the first gear mechanism 11 has a larger diameter than the operating-side transmission gear 56a and meshes with the operating-side transmission gear 56a. As a result, the first output gear 17 enables power transmission between the first gear mechanism 11 and the second gear mechanism 20 while maintaining the spacing between them, and also transmits the rotational output of the first gear mechanism 11 to the second gear mechanism 20 with an increased speed.

The steering unit 10 also includes the transmission mechanism 70, which couples the drive device 65 to the second gear mechanism 20. The transmission mechanism 70 decelerates the driving force of the drive device 65 and transmits the decelerated driving force to the second gear mechanism 20. According to this configuration, the driving force (output) of the drive device 65 is decelerated and transmitted to the second gear mechanism 20, thereby reducing the torque generated by the drive device 65 and downsizing the drive device 65.

In the steering unit 10, the second gear mechanism 20 has the transmission gears 56, including the operating-side transmission gear 56a, and the second input gear 46 having a smaller diameter than the transmission gears 56. The second input gear 46 meshes with the transmission gears 56. The transmission mechanism 70 transmits the driving force of the drive device 65 to the second input gear 46. According to this configuration, the driving force (output) of the drive device 65 can be further decelerated by transmitting the driving force of the drive device 65 to the second input gear 46 of the second gear mechanism 20, thereby reducing the output torque of the drive device 65 for downsizing.

In the steering unit 10, the drive device 65 includes the drive shaft 67 that is positioned parallel to the second output shaft 25 of the second gear mechanism 20. As viewed from the second axial direction F2, the drive device 65 has the outline A3 which is smaller than the outline A2 of the second gear mechanism 20. According to this configuration, the drive device 65 and the second gear mechanism 20 can be arranged in parallel such that their axial directions are parallel. This allows the entire device to be downsized in the second axial direction F2, compared to the case where the drive device 65 and the second gear mechanism 20 overlap each other in the axial direction. Furthermore, the drive device 65 is smaller than the second gear mechanism 20 as viewed from the second axial direction F2, and thus the entire device can be downsized as viewed from the axial direction.

In the steering unit 10, the second gear mechanism 20 has an input shaft (second input shaft 45) to which the primary rotation is input. The transmission mechanism 70 includes the drive pulley 75 with a relatively small diameter attached to the drive shaft 67 of the drive device 65, the driven pulley 76 attached to the input shaft (second input shaft 45) of the second gear mechanism 20 and having a larger diameter than the drive pulley 75, and the transmission belt 77 stretched round both pulleys 75, 76. According to this configuration, the drive device 65 can be coupled to the second gear mechanism 20 via the belt-type transmission mechanism 70. Therefore, compared to the use of a gear-type transmission mechanism, the effect of backlash can be reduced to improve operational accuracy. Furthermore, the spacing between the drive device 65 and the second gear mechanism 20 can be secured with a small number of parts.

The steering unit 10 also includes the driven pulley support shaft 76a that supports the driven pulley 76. The driven pulley support shaft 76a also serves as the transmission output shaft 76b that transmits driving force to the second gear mechanism 20. According to this configuration, use of the driven pulley support shaft 76a also as the transmission output shaft 76b reduces the number of components, thereby achieving weight reduction and improved operational accuracy.

In the steering unit 10, the second gear mechanism 20 includes the second input gear 46 (transmission output gear 76c). The second input gear 46 is integrally formed on the transmission output shaft 76b. According to this configuration, the second input gear 46 of the second gear mechanism 20 is integrated with the transmission output shaft 76b, which also serves as the driven pulley support shaft 76a, and thus the number of components can be reduced, thereby achieving weight reduction and improved operational accuracy.

In the steering unit 10, the transmission output shaft 76b includes the shaft portion 47 that extends along the second axial direction F2 beyond the second input gear 46 into the second gear mechanism 20. The shaft portion 47 is supported via the bearing 21d inside the second gear mechanism 20. According to this configuration, the shaft portion 47 provided at the distal end of the transmission output shaft 76b is supported inside the second gear mechanism 20, and thus the transmission output shaft 76b can be supported at both ends thereof by the bearing 37d on the transmission mechanism 70 side and the bearing 21d on the second gear mechanism 20 side. This configuration simplifies and downsizes the bearing structure on the transmission mechanism 70 side, as compared to the case where the transmission output shaft 76b is supported only by a bearing on the transmission mechanism 70 side.

The steering unit 10 includes a flange 37, which forms the side of the gear case 21 of the second gear mechanism 20 facing the second axial direction F2, and the case 12, which houses the conversion mechanism parts 11d of the first gear mechanism 11. The flange 37 and the case 12 are integrally formed with each other. According to this configuration, the flange 37, which forms the side of the gear case 21 of the second gear mechanism 20 facing one side (+f2) in the second axial direction F2, and the case 12, which houses the first gear mechanism 11, are integrally formed with each other. This reduces the number of parts and improves the accuracy of the relative position of the first gear mechanism 11 and the second gear mechanism 20, thereby reducing weight and improving operational accuracy.

The steering unit 10 includes a plurality of fasteners B2 that fix the case member (first case 22) of the second gear mechanism 20 to the flange 37, and washer plates 39 disposed between the flange 37 and the fasteners B2. The washer plates 39 are secured between the seating surfaces of the fasteners B2 and the flange 37 by tightening the fasteners B2. Each washer plate 39 is sized to allow contact with the seating surfaces of at least two of the fasteners B2. According to this configuration, the washer plate 39 for fastening the first case 22 of the second gear mechanism 20 to the flange 37 can be sized to span the seating surfaces of the plurality of fasteners B2. Therefore, the region of each washer plate 39 that is located among the fasteners B2 contacts the flange 37, unlike the case in which a separate washer is provided for each fastener B2. This reduces the surface pressure exerted on the flange 37 by tightening the fasteners B2. As a result, even when the flange 37 is formed of light metal with low hardness, deformation of the seating surface side of the flange 37 can be inhibited, and the tightening torque of each fastener B2 can be secured, thus improving reliability.

In the steering unit 10, the controller 68, which controls the drive of the drive device 65, is provided at one end of the drive device 65 and is located so as to overlap the axial direction of the drive shaft 67 (the drive axis direction, or the second axial direction F2). The controller 68 has a flat shape with a reduced thickness in the drive axis direction, and has a larger size than the drive device 65 as viewed from the axial direction of the drive shaft 67. According to this configuration, the controller 68 provided at the axial end of the drive device 65 has a flat shape with a reduced thickness in the drive axis direction and has a larger size than the drive device 65 as viewed from the drive axis direction. Therefore, the axial dimension of the drive device 65, including the controller 68, can be reduced, while the size of the controller 68 can be secured to improve reliability.

In the steering unit 10, the first gear mechanism 11 has a first input shaft 13 to which the rotation of the steering wheel operation is input. The axial direction of the first input shaft 13 is defined as the first axial direction F1. The first gear mechanism 11 is arranged so that the first axial direction F1 intersects the second axial direction F2 of the second gear mechanism 20. The first gear mechanism 11 and the second gear mechanism 20 are arranged along the third direction (intersecting direction) F3, which intersects the first and second axial directions F1 and F2. The flange 37 and the case 12 are formed symmetrically with respect to the imaginary plane S1 along the second axial direction F2 and the third direction F3. The first gear mechanism 11 can be attached in a posture in which the orientation of the conversion mechanism parts 11d with respect to the case 12 is inverted along the first axial direction F1. According to this configuration, the flange 37 and the case 12 are formed symmetrically with respect to the imaginary plane S1 along the second axial direction F2 and the third direction F3 (a plane orthogonal to the first axial direction F1). The conversion mechanism parts 11d of the first gear mechanism 11 can be attached to the case 12 in an inverted orientation along the first axial direction F1. Thus, the steering unit 10 can be used for both right-hand drive and left-hand drive configurations. When the steering unit 10 is installed on both right-hand drive and left-hand drive vehicles, the arrangement of bulky components such as the second gear mechanism 20 in the steering unit 10 is approximately symmetrical between the right-hand drive and left-hand drive configurations. Accordingly, since the first axial direction F1 (oriented vertically when the steering unit 10 is installed on a vehicle) of the first gear mechanism 11-which is coupled to the steering shaft 3-can be inverted, and the flange 37 of the second gear mechanism 20, along with the case 12, is formed in a symmetrical shape with respect to the imaginary plane S1 orthogonal to the first axial direction F1, the steering unit 10 can be laterally symmetrical and thus can be installed on both right-hand drive and left-hand drive vehicles. Thus, the versatility of the steering unit 10 can be increased and costs can be reduced.

In the steering unit 10, the gear case 21 that houses the reduction mechanism parts 20d of the second gear mechanism 20 forms the oil chamber R1 that houses the reduction mechanism parts 20d. The case 12 housing the conversion mechanism parts 11d in the first gear mechanism 11 forms the separation space K2 separated from the oil chamber R1 of the second gear mechanism 20 by the oil seal 16c. According to this configuration, the first gear mechanism 11, to which the operation is input from the steering shaft 3, has a low rotational speed and thus is lubricated with grease. When the interior of the case 12 of the first gear mechanism 11 is separated from the oil chamber R1 of the second gear mechanism 20, it is possible to reduce the amount of oil in the entire device for weight reduction, and also to reduce friction caused by oil agitation to improve operability. The sensor 19 for detecting steering torque and rotational speed is attached to the first gear mechanism 11. In the case where the interior of the case 12 of the first gear mechanism 11 communicates with the oil chamber R1, it is necessary to take measures such as providing a dedicated oil seal for the sensor 19. In contrast, in the case where the interior of the case 12 of the first gear mechanism 11 is separated from the oil chamber R1 of the second gear mechanism 20, a simple oil seal can be used.

In the steering unit 10, the drive device 65 and the second gear mechanism 20 are coupled via the belt-type transmission mechanism 70. Furthermore, the transmission case 71 of the transmission mechanism 70 forms the second separation space K3 separated from the oil chamber R1 of the second gear mechanism 20 by the second oil seal (oil seal 45c and O-ring 37c1). According to this configuration, since the transmission mechanism 70 that couples the drive device 65 to the second gear mechanism 20 is of a belt type, the effect of backlash can be reduced compared to the case where the transmission mechanism 70 is of a gear type. Furthermore, since the number of parts can be reduced, it is possible to achieve reduced weight and improved operational accuracy. Since the interior of the transmission case 71 of the transmission mechanism 70 is separated from the oil chamber R1 of the second gear mechanism 20, it is possible to reduce the amount of oil in the entire device, thereby achieving weight reduction. Furthermore, the friction caused by oil agitation can be reduced to improve operability. In the case where the transmission mechanism 70 is oil-free, the oil seal on the drive device 65 side can also be eliminated.

In the steering unit 10, the first output shaft 16 of the first gear mechanism 11 is positioned so as not to overlap the second gear mechanism 20 as viewed from the second axial direction F2. The distal end of the first output shaft 16 is covered by the cover portion 72a attached to the case 12. The cover portion 72a has the protuberance 72c that protuberates along the second axial direction F2 and protuberates on the transmission mechanism 70 side in the second axial direction F2. According to this configuration, the cover portion 72a covering the distal end of the first output shaft 16 of the first gear mechanism 11 has the protuberance 72c that protuberates along the second axial direction F2 and protuberates on the transmission mechanism 70 side in the axial direction. This makes it possible to form a space inside the cover portion 72a so as to communicate with the oil chamber R1 of the second gear mechanism 20. Thus, a space communicating with the oil chamber R1 can be formed at a position not overlapping the second gear mechanism 20 as viewed from the second axial direction F2. Therefore, the proportion of the space to the total volume of the oil chamber can be secured, thus improving reliability.

In the steering unit 10, the second gear mechanism 20 includes the gear case 21, the gear section 40 housed in the gear case 21, and at least one crankshaft 51 supported by the first case 22 of the gear case 21. The gear case 21 includes the first case 22 and the second case 23 that is rotatably supported on the outer circumference of the first case 22 and has internal teeth (internal tooth pins 26) that mesh with the gear section 40. The gear section 40 includes the oscillating gears 41, 42 supported by the eccentric portions 61, 62 of the crankshaft 51, capable of eccentric motion by the rotation of the eccentric portions 61, 62, and having external teeth that mesh with the internal teeth. According to this configuration, the second gear mechanism 20 is an eccentric oscillation speed reducer that can greatly decelerate the input rotation by eccentrically moving the oscillating gears 41, 42 having external teeth inside the second case 23 having internal teeth. Thus, backlash occurring on the motor side and column side at the input side of the speed reducer is significantly decelerated and output by the speed reducer. The eccentric oscillation speed reducers have the characteristic of low backlash in the gear mechanism itself. Therefore, the backlash (hysteresis loss) on the output side of the speed reducer is extremely small, and thus the steering system can have high responsiveness and controllability.

In the steering unit 10, the oscillating gears 41, 42 may be configured as trochoid gears in which a plurality of the external teeth can simultaneously contact the inner teeth. According to this configuration, since the oscillating gears 41, 42 of the speed reducer are trochoid gears in which a plurality of the external teeth are constantly in contact with the internal teeth, backlash in the speed reducer (second gear mechanism 20) can be reduced, and the steering system can have high responsiveness and controllability.

In the steering unit 10, the second case 23 may retain a plurality of columns (internal tooth pins 26) that form the arc profiles of the internal teeth, and each of the plurality of columns may be rotatable about the respective axial center. According to this configuration, the arc profiles of the internal teeth of the second case 23 are formed by a plurality of rotatable columns, so that the sliding contact of the external teeth against the internal teeth is converted into a rolling contact by rotation of the plurality of columns. Therefore, the gear mechanism can have low friction loss and high efficiency.

### Modification

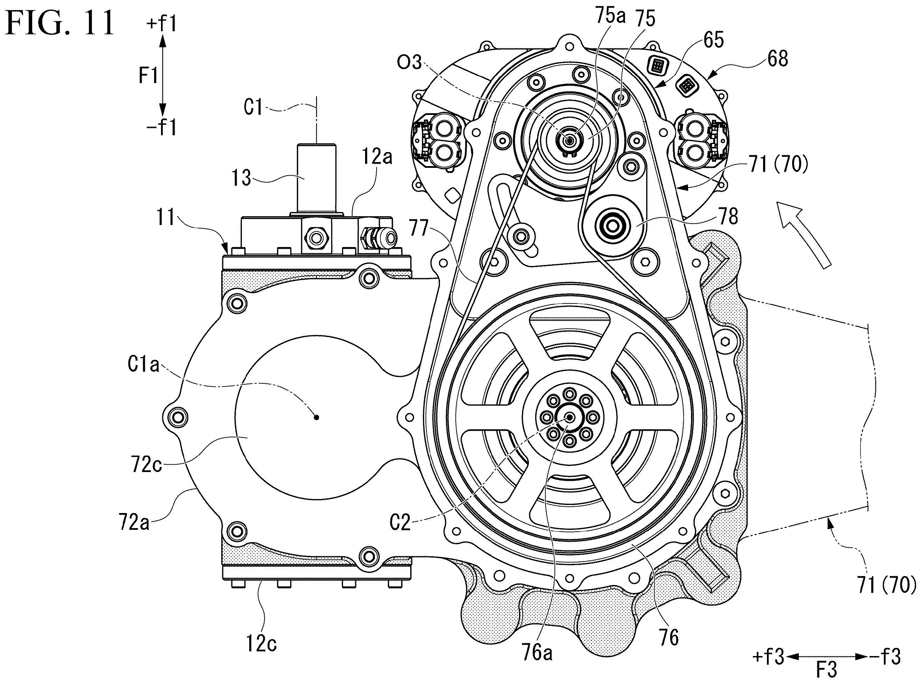

Fig. 11 shows the steering unit 10 as viewed from the second axial direction F2, representing a modification with modified location of the drive device 65. As shown in Fig. 11, the steering unit 10 is highly susceptible to modification in the location of the drive device 65 according to the vehicle's layout and other factors. Thus, the drive device 65 (and controller 68) can be moved and positioned in the circumferential direction of the second gear mechanism 20, having a circular shape, as viewed from the second axial direction F2.

### Another Modification

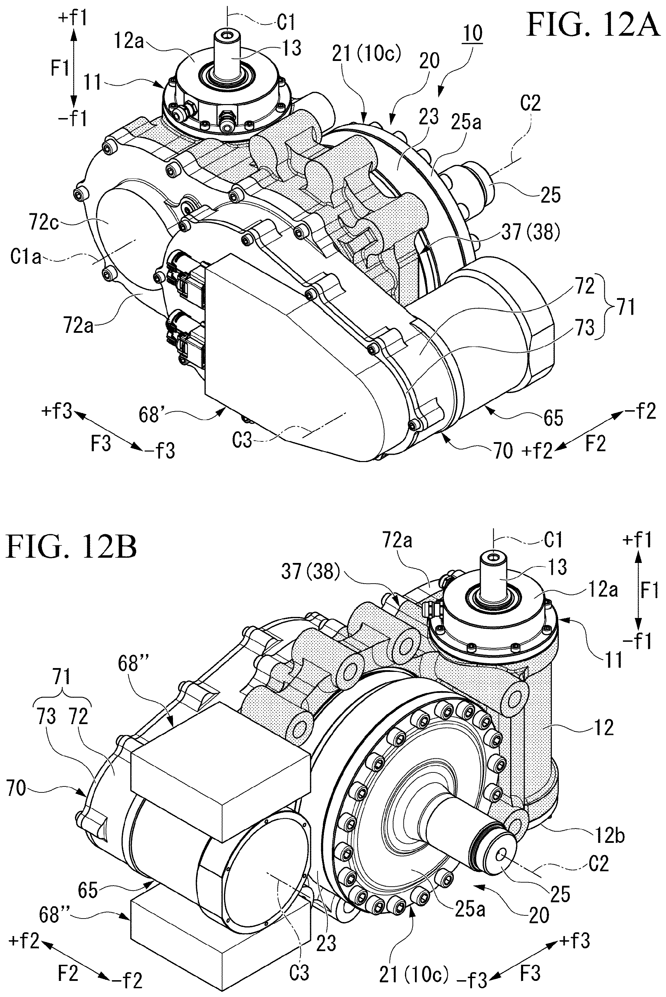

Fig. 12A is a perspective view showing a first modification of the location of the controller 68. Fig. 12B is a perspective view showing a second modification of the controller 68. The controller 68' shown in Fig. 12A is located on the outside surface of the case cover 73 of the transmission case 71 of the transmission mechanism 70. In this arrangement, a large surface area can be easily secured in the outer surface of the transmission case 71, such that the controller 68 can have multiple drive circuits. The controller 68" shown in Fig. 12B is divided into several (e.g., two) pieces arranged around the outer circumference of the drive device 65. Dividing the controller 68 into small pieces is suitable for the case where a large space cannot be secured.

The several embodiments described herein represent a number of possible examples and are not intended to limit the scope of the invention. The novel embodiments may have various other forms and are susceptible to omission, replacement, and modification of various elements thereof without departing from the spirit of the invention. The embodiments and variations thereof are included in the scope and purport of the invention and are also included in the inventions recited in the claims and equivalents thereof. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

### List of reference numbers:

- 1: steering assisting device
- 3: steering shaft
- 10: steering unit (steering device)
- 11: first gear mechanism
- 11d: conversion mechanism part
- 12: case
- 13: operation input shaft (first input shaft)
- 16: first output shaft
- 16c: oil seal (seal member)
- 17: first output gear
- 19: sensor
- 20: second gear mechanism
- 21: gear case
- 21d: bearing
- 22: first case
- 23: second case
- 25: second output shaft (output shaft)
- 26: internal tooth pin (column)
- 37: flange
- 37c1: O-ring (second seal member)
- 37d: bearing
- 39: washer plate
- 40: gear section
- 41, 42: oscillating gear
- 45: second input shaft (input shaft)
- 45c: oil seal (second seal member)
- 46: second input gear
- 47: shaft portion
- 51: crankshaft
- 56: transmission gear
- 56a: operating-side transmission gear (primary input gear)
- 61, 62: eccentric portion
- 65: drive device
- 67: drive shaft
- 68: controller (control device)
- 70: transmission mechanism
- 71: transmission case
- 72a: cover portion
- 72c: protuberance
- 73: case cover
- 75: drive pulley (first pulley)
- 76: driven pulley (second pulley)
- 76a: driven pulley support shaft (second pulley support shaft)
- 76b: transmission output shaft
- 76c: transmission output gear
- 77: transmission belt
- A2, A3: outline
- B2: fastener
- F1: first axial direction
- F2: second axial direction
- F3: third direction (intersecting direction)
- H2: width
- K2: separation space
- K3: second separation space
- R1: oil chamber
- S1: imaginary plane

## Claims

1. A steering device (10), comprising:
a first gear mechanism (11) configured to receive rotation of steering wheel operation, convert a direction of the rotation, and output converted rotation as primary rotation; and
a second gear mechanism (20) configured to receive the primary rotation output from the first gear mechanism (11), decelerate the primary rotation, and output decelerated rotation,
wherein a second axial direction (F2) is defined as an axial direction of an output shaft (25) included in the second gear mechanism (20), the first gear mechanism (11) is located such that at least a portion of the first gear mechanism (11) falls within a width (H2) of the second gear mechanism (20) along the second axial direction (F2).

2. The steering device (10) of claim 1, further comprising a drive device (65) configured to output a driving force for assisting the steering wheel operation, wherein the drive device (65) is located such that at least a portion of the drive device (65) falls within the width (H2) of the second gear mechanism (20) along the second axial direction (F2).

3. The steering device (10) of claim 1,
wherein the second gear mechanism (20) includes a primary input gear (56a) that is located inside an outline (A2) of the second gear mechanism (20) as viewed from the second axial direction (F2),
wherein the first gear mechanism (11) includes a first output gear (17) having a larger diameter than the primary input gear (56a), and
wherein the first output gear (17) is meshed with the primary input gear (56a).

4. The steering device (10) of claim 2, further comprising a transmission mechanism (70) that couples the drive device (65) to the second gear mechanism (20), wherein the transmission mechanism (70) decelerates the driving force output from the drive device (65) and transmits the decelerated driving force to the second gear mechanism (20).

5. The steering device (10) of claim 4,
wherein the second gear mechanism (20) includes transmission gears (56) and a second input gear (46), the transmission gears (56) including a primary input gear (56a), the second input gear (46) having a smaller diameter than the transmission gears (56),
wherein the second input gear (46) meshes with the transmission gears (56), and wherein the transmission mechanism (70) transmits to the second input gear (46) the driving force output from the drive device (65).

6. The steering device (10) of claim 4,
wherein the drive device (65) includes a drive shaft (67) that is positioned parallel to the output shaft (25) of the second gear mechanism (20), and
wherein the drive device (65) has a smaller outline than the second gear mechanism (20), as viewed from the second axial direction (F2).

7. The steering device (10) of claim 4,
wherein the drive device (65) includes a drive shaft (67) that is positioned parallel to the output shaft (25) of the second gear mechanism (20),
wherein the second gear mechanism (20) includes an input shaft (45) to which the primary rotation is input, and
wherein the transmission mechanism (70) includes:
a first pulley (75) attached to the drive shaft (67) of the drive device (65);
a second pulley (76) attached to the input shaft (45), the second pulley (76) having a larger diameter than the first pulley (75); and
a transmission belt (77) stretched round the first pulley (75) and the second pulley (76).

8. The steering device (10) of claim 7, further comprising a second pulley support shaft (76a) that supports the second pulley (76), wherein the second pulley support shaft (76a) also serves as a transmission output shaft (76b) that transmits the driving force to the second gear mechanism (20).

9. The steering device (10) of claim 8,
wherein the second gear mechanism (20) includes a second input gear (46), and
wherein the second input gear (46) is formed integrally with the transmission output shaft (76b).

10. The steering device (10) of claim 8,
wherein the transmission output shaft (76b) includes a shaft portion (47) that extends along the second axial direction (F2) into the second gear mechanism (20), and
wherein the shaft portion (47) is supported via a bearing (21d) inside the second gear mechanism (20).

11. The steering device (10) of claim 1, further comprising:
a flange (37) which forms a side of a gear case (21) of the second gear mechanism (20), the side facing the second axial direction (F2); and
a case (12) which houses conversion mechanism parts (11d) of the first gear mechanism (11),
wherein the first gear mechanism (11) includes a first input shaft (13) to which the rotation of the steering wheel operation is input,
wherein a first axial direction (F1) is defined as an axial direction of the first input shaft (13), the first gear mechanism (11) is located such that the first axial direction (F1) intersects the second axial direction (F2) of the second gear mechanism (20),
wherein the first gear mechanism (11) and the second gear mechanism (20) are arranged along an intersecting direction (F3) that intersects the first axial direction (F1) and the second axial direction (F2),
wherein the flange (37) and the case (12) are formed symmetrically with respect to an imaginary plane (S1) along the second axial direction (F2) and the intersecting direction (F3), and
wherein the first gear mechanism (11) can be attached in a posture in which an orientation of the conversion mechanism parts (11d) with respect to the case (12) is inverted along the first axial direction (F1).

12. A steering device (10), in particular according to one of claims 1 to 11, comprising:
a first gear mechanism (11) configured to receive rotation of steering wheel operation, convert a direction of the rotation, and output converted rotation as primary rotation; and
a second gear mechanism (20) configured to receive the primary rotation output from the first gear mechanism (11), decelerate the primary rotation, and output decelerated rotation,
wherein the second gear mechanism (20) includes a gear case (21), a gear section (40) housed in the gear case (21), and at least one crankshaft (51),
wherein the gear case (21) includes a first case (22) and a second case (23), the second case (23) being rotatably supported on an outer circumference of the first case (21) and having internal teeth (26) that mesh with the gear section (40),
wherein the at least one crankshaft (51) is supported on the first case (22),
wherein the gear section (40) includes oscillating gears (41, 42) that are supported on eccentric portions (61, 62) of the at least one crankshaft (51) and capable of eccentric motion by rotation of the eccentric portions (61, 62), and
wherein the oscillating gears (41, 42) have external teeth that mesh with the internal teeth (26).

13. The steering device (10) of claim 12, wherein the oscillating gears (41, 42) are trochoid gears in which a plurality of the external teeth can simultaneously contact the internal teeth (26).

14. The steering device (10) of claim 13,
wherein the second case (23) retains a plurality of columns (26) that form arc profiles of the internal teeth (26), and
wherein each of the plurality of columns (26) is rotatable around a respective axial center.
